# EUROPÄISCHE PATENTSCHRIFT

(11) **EP 3 177 871 B1**
(45) Veröffentlichungstag und Bekanntmachung des Hinweises auf die Patenterteilung: **06.06.2018**
(21) Anmeldenummer: 15797888.3
(22) Anmeldetag: 05.11.2015
(51) Int. Cl.: F23C 99/00

(54) **VERBRENNUNG VON ELEKTROPOSITIVEM METALL IN EINER FLÜSSIGKEIT**
COMBUSTION OF ELECTROPOSITIVE METAL IN A LIQUID
BRÛLAGE D'UN MÉTAL ÉLECTROPOSITIF DANS UN LIQUIDE

(30) Priorität: 11.11.2014 DE 102014222919
(43) Veröffentlichungstag der Anmeldung: 14.06.2017
(73) Patentinhaber: Siemens Aktiengesellschaft, 80333 München (DE)
(72) Erfinder: ECKERT, Helmut, 91341 Röttenbach (DE); KELLERMANN, Renate Elena, 91052 Erlangen (DE); SCHMID, Günter, 91334 Hemhofen (DE); TAROATA, Dan, 91054 Erlangen (DE)
(86) Internationale Anmeldenummer: PCT/EP2015/075847
(87) Internationale Veröffentlichungsnummer: WO 2016/075029

(56) Entgegenhaltungen:
- US-A- 3 353 349
- US-A- 3 991 559
- US-A1- 2011 252 800

## Beschreibung

Die vorliegende Erfindung betrifft ein Verfahren zur Reaktion eines elektropositiven Metalls, wobei das elektropositive Metall ausgewählt ist aus Alkali-, Erdalkalimetallen, Aluminium und Zink, sowie Mischungen und/oder Legierungen derselben, mit einer Flüssigkeit, wobei das elektropositive Metall in die Flüssigkeit unterhalb der Flüssigkeitsoberfläche verdüst und/oder zerstäubt wird und in der Flüssigkeit zumindest teilweise reagiert, sowie eine Vorrichtung zur Durchführung des Verfahrens.

Fossile Brennstoffe liefern jährlich zehntausende Terawattstunden an elektrischer, thermischer und mechanischer Energie. Das Endprodukt der Verbrennung, Kohlendioxid (CO₂), wird jedoch zunehmend zu einem Umwelt- und Klimaproblem.

Wie sich ein vollständiger Energiekreislauf mit elektropositiven Metallen darstellen lässt, wird in

DE 10 2008 031 437 A1 und DE 10 2010 041033 A1 aufgezeigt. Als Fallbeispiel dient Lithium, das sowohl als Energieträger als auch als Energiespeicher dient, wobei sich die Erkenntnisse auf andere elektropositive Metalle wie Natrium, Kalium oder Magnesium, Calcium, Barium oder Aluminium und Zink übertragen lassen.

Die Anmeldung DE 10 2014 203039.0 und die Anmeldung

DE 10 2014 209 529.8 2013E24783DE beschreiben den Einsatz von u.a. Alkalimetallen als Energiespeicher und deren Nutzung in einem Kraftwerksbetrieb.

Die Anmeldung DE 10 2014 203039.0 beschreibt hierbei einen Aufbau (Zyklonbrenner) zur Verbrennung von beispielsweise Lithium in CO₂ oder N₂-haltigen Atmosphären mit gleichzeitiger Trennung der festen und gasförmigen Reaktionsprodukten über den Zyklon. Die Anmeldung DE 102014209529.8 beschreibt einen Porenbrenner für elektropositive Metalle bei der Verbrennung in Gasen wie beispielsweise CO₂, N₂, O₂, sowie Gasgemischen davon mit oder ohne Wasserdampf. Dabei wird flüssiges Lithium in ein poröses Rohr unter Druck eingeführt und in dem Porenbrenner mit einem Gas verbrannt. Für den dort beschriebenen Porenbrenner werden unter anderem keramische Rohre vorgeschlagen. Flüssige Alkalimetalle reagieren jedoch insbesondere bei höherer Temperatur mit oxidischen (Sauerstoffentzug) oder nitridischen Materialien. Besonders bevorzugt sind daher Metalle aus mit Alkali nicht legierbaren Materialien. Die US 3,991,559 beschreibt ein Verfahren und eine korrespondierende Vorrichtung zur Reaktion der elektropositiven Metalle Lithium und Aluminium mit einer Flüssigkeit, wobei das Metall in die Flüssigkeit verdüst und/oder zerstäubt wird und mit der Flüssigkeit reagiert. Es besteht jedoch nach wie vor ein Bedarf an einem Verfahren und an einer Vorrichtung, mit der eine effiziente Abtrennung der bei der Reaktion mit elektropositivem Metall entstehenden Produkte ermöglicht wird, ohne dass feste oder flüssige Produkte in die Gasphase übergehen und aufwändig abgetrennt werden, sowie an einem Verfahren und einer Vorrichtung, mit der zugleich eine effiziente Umwandlung der bei der Reaktion frei werdenden Energie ermöglicht wird.

Die Erfinder haben nunmehr herausgefunden, dass eine einfache Abtrennung der entstehenden, insbesondere festen und flüssigen Produkte der Reaktion mit elektropositivem Metall ermöglicht wird, wenn das elektropositive Metall direkt in eine Flüssigkeit eingebracht wird, mit der es reagieren kann, so dass die festen und flüssigen Produkte und ggf. gasförmigen Produkte direkt in Lösung oder Suspension gehen und somit eine aufwändige Abtrennung hiervon vermieden wird. Zudem kann durch Einbringen in die Flüssigkeit die bei der Reaktion entstehende Wärme gut abgeführt werden, was die Reaktionsführung weiterhin erleichtert. Durch Verdampfen der Flüssigkeit kann hierbei gemäß bestimmten Ausführungsformen zudem der Dampfdruck im System erhöht werden. Durch die erfindungsgemäße Reaktionsführung kann somit auch eine effiziente Umwandlung der bei der exothermen Reaktion freiwerdenden thermischen Energie in beispielsweise Elektrizität oder thermische Energie für beispielsweise Fernwärme ermöglicht werden. Durch die Reaktion in Flüssigkeit können zudem chemische Wertprodukte erzeugt werden, die der Vorrichtung auf einfache Weise entnommen werden können.

Weiterhin offenbart die Erfindung den geeigneten Einsatz von elektropositiven Metallen, Z.B. Alkali- / Erdalkalimetallen, sowie deren Legierungen, als stoffliche Energiespeicher. Die elektropositiven Metalle können beispielsweise elektrochemisch unter Nutzung von elektrischer Energie hergestellt (Ladeprozess). Die somit in den elektropositiven Metallen gespeicherte chemische Energie kann über einen Verbrennungsprozess / eine Reaktion in einer Flüssigkeit wie Wasser, superkritischem / flüssigem CO₂ oder SO₂ als thermische Energie wieder freigesetzt werden. In nachfolgenden Prozessen (z.B. Wärmetauscher und Dampfturbine oder Gas- bzw. Expanderturbine) kann diese wieder in elektrische Energie umgewandelt werden.

Die vorliegende Erfindung betrifft gemäß einem ersten Aspekt ein Verfahren zur Reaktion eines elektropositiven Metalls, wobei das elektropositive Metall ausgewählt ist aus Alkali-, Erdalkalimetallen, Aluminium und Zink, sowie Mischungen und/oder Legierungen derselben, mit einer Flüssigkeit, wobei das elektropositive Metall in die Flüssigkeit unterhalb der Flüssigkeitsoberfläche verdüst und/oder zerstäubt wird und in der Flüssigkeit zumindest teilweise reagiert.

Gemäß einem weiteren Aspekt betrifft die Erfindung eine Vorrichtung zur Reaktion eines elektropositiven Metalls mit einer Flüssigkeit, wobei das elektropositive Metall ausgewählt ist aus Alkali-, Erdalkalimetallen, Aluminium und Zink, sowie Legierungen und/oder Mischungen derselben, umfassend einen Reaktor, in dem die Reaktion zwischen dem elektropositiven Metall und der Flüssigkeit stattfindet, mindestens einen Porenbrenner und/oder mindestens eine Einrichtung zum Verdüsen und/oder Zerstäuben des elektropositiven Metalls in die Flüssigkeit am und/oder im Reaktor, mindestens eine erste Zuführeinrichtung für das elektropositive Metall zum Inneren des Porenbrenners und/oder zur Einrichtung zum Verdüsen und/oder Zerstäuben des elektropositiven Metalls, die derart ausgebildet ist, dem Inneren des Porenbrenners und/oder der Einrichtung zum Verdüsen und/oder Zerstäuben des elektropositiven Metalls das elektropositive Metall zuzuführen, mindestens eine zweite Zuführeinrichtung für die Flüssigkeit am und/oder im Reaktor, die derart ausgebildet, die Flüssigkeit dem Reaktor zuzuführen, mindestens eine erste Abführeinrichtung für die bei der Reaktion von elektropositivem Metall und Flüssigkeit entstehende Lösung oder Suspension, die derart ausgebildet ist, die bei der Reaktion von elektropositivem Metall und Flüssigkeit entstehende Lösung oder Suspension aus dem Reaktor abzuführen, mindestens eine zweite Abführeinrichtung für gasförmige Produkte, die derart ausgebildet ist, zumindest teilweise verdampfte Flüssigkeit und/oder bei der Reaktion von elektropositivem Metall und Flüssigkeit entstehende gasförmige Produkte aus dem Reaktor abzuführen, und eine Steuereinrichtung, die derart ausgebildet ist, die Flüssigkeit dem Reaktor derart zuzuführen, dass der mindestens einen Porenbrenner und/oder die mindestens eine Einrichtung zum Verdüsen und/oder Zerstäuben des elektropositiven Metalls sich im Reaktor in der Flüssigkeit unterhalb der Flüssigkeitsoberfläche befinden.

Weitere Aspekte der vorliegenden Erfindung sind den abhängigen Ansprüchen und der detaillierten Beschreibung sowie den Zeichnungen zu entnehmen.

Die beiliegenden Zeichnungen sollen Ausführungsformen der vorliegenden Erfindung veranschaulichen und ein weiteres Verständnis dieser vermitteln. Im Zusammenhang mit der Beschreibung dienen sie der Erklärung von Konzepten und Prinzipien der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander dargestellt. Gleiche, funktionsgleiche und gleich wirkende Elemente, Merkmale und Komponenten sind in den Figuren der Zeichnungen, sofern nichts anderes ausgeführt ist, jeweils mit denselben Bezugszeichen versehen.
- Figur 1: zeigt schematisch eine beispielhafte Ausführungsform einer Metall-Sinterdüse, die in einer erfindungsgemäßen Vorrichtung verwendet werden kann.
- Figur 2: zeigt schematisch eine weitere beispielhafte Ausführungsform einer Metall-Sinterdüse, die in einer erfindungsgemäßen Vorrichtung verwendet werden kann.
- Figur 3: stellt schematisch eine beispielhafte Einstoffdüse zur Zufuhr von flüssigem elektropositivem Metall in die Flüssigkeit dar, welche in einer erfindungsgemäßen Vorrichtung verwendet werden kann.
- In Figur: 4 ist schematisch eine beispielhafte Zweistoffdüse zur Zufuhr von flüssigem elektropositivem Metall in die Flüssigkeit dargestellt, welche ebenfalls in einer erfindungsgemäßen Vorrichtung verwendet werden kann.
- Figur 5: zeigt schematisch eine beispielhafte Ausführungsform einer erfindungsgemäßen Vorrichtung.
- Figur 6: zeigt darüber hinaus schematisch eine weitere beispielhafte Ausführungsform einer erfindungsgemäßen Vorrichtung.

Die vorliegende Erfindung betrifft gemäß einem ersten Aspekt ein Verfahren zur Reaktion eines elektropositiven Metalls, wobei das elektropositive Metall ausgewählt ist aus Alkali-, Erdalkalimetallen, Aluminium und Zink, sowie Mischungen und/oder Legierungen derselben, mit einer Flüssigkeit, wobei das elektropositive Metall in die Flüssigkeit unterhalb der Flüssigkeitsoberfläche verdüst und/oder zerstäubt wird und in der Flüssigkeit zumindest teilweise reagiert.

Das elektropositive Metall ist gemäß bestimmten Ausführungsformen ausgewählt aus Alkalimetallen, bevorzugt Li, Na, K, Rb und Cs, Erdalkalimetallen, bevorzugt Mg, Ca, Sr und Ba, Al und Zn, sowie Gemischen und/oder Legierungen derselben. In bevorzugten Ausführungsformen ist das elektropositive Metall ausgewählt aus Li, Na, K, Mg, Ca, Al und Zn, und weiter bevorzugt umfasst das elektropositive Metall Li, Na, K, Ca und Mg, wobei das elektropositive Metall gemäß bestimmten Ausführungsformen besonders bevorzugt zumindest Lithium, Natrium oder Kalium umfasst bzw. eines dieser Metalle ist. Es können jedoch beliebige der genannten Metalle kombiniert werden. Das elektropositive Metall ist darüber hinaus nicht besonders beschränkt und kann beispielsweise als Feststoff oder Flüssigkeit vorliegen. Bevorzugt ist das elektropositive Metall bei der Zufuhr jedoch flüssig, da auf diese Weise ein einfacher Transport der Legierung stattfinden kann und das elektropositive Metall effektiver versprüht bzw. zerstäubt werden kann.

Gemäß bestimmten Ausführungsformen wird das elektropositive Metall als Flüssigkeit zugeführt. Auf diese Weise kann das elektropositive Metall einfach transportiert werden und die Reaktion des elektropositiven Metalls in der Flüssigkeit leichter lokalisiert werden. Gemäß bestimmten Ausführungsformen findet die Verbrennung weiterhin bei einer Temperatur statt, die über dem Schmelzpunkt der bei der Reaktion des elektropositiven Metalls und der Flüssigkeit entstehenden Produkte liegt. Durch diese Ausgestaltung entstehen bei der Reaktion des elektropositiven Metalls flüssige Reaktionsprodukte, die ggf. leichter in Lösung bzw. Suspension/Emulsion gehen können. Hierdurch können die Einrichtungen zum Verdüsen oder Zerstäuben bzw. Porenbrenner zum Versprühen bzw. Zerstäuben des elektropositiven Metalls zudem leichter von Verschmutzungen und Ablagerungen frei gehalten werden. Gemäß bestimmten Ausführungsformen sind die Reaktionsprodukte der Reaktion des elektropositiven Metalls mit der Flüssigkeit in der Flüssigkeit, was einfach anhand der Reaktanden und deren Eigenschaften bestimmt werden kann. So sind beispielsweise verschiedene Hydroxidsalze der Alkalimetalle gut in Wasser löslich.

Als Flüssigkeit kommen gemäß bestimmten Ausführungsformen solche Flüssigkeiten in Frage, welche mit dem elektropositiven Metall in einer exothermen Reaktion reagieren können, wobei diese nicht besonders beschränkt sind. Beispielhaft kann die Flüssigkeit Wasser, Stickstoff, superkritisches Kohlendioxid, oder superkritische Schwefeloxide SOₓ mit 0 < x ≤ 4, oder Gemische derselben umfassen. Das Verfahren kann also auch zur Entschwefelung verwendet werden. Je nach Flüssigkeit können hierbei mit den verschiedenen elektropositiven Metallen verschiedene Produkte erhalten werden, die als Feststoff, Flüssigkeit sowie auch gasförmig anfallen können. Je nach gewählter Flüssigkeit können zudem die bei der Reaktion entstehenden Produkte zumindest teilweise in dieser löslich sein, so dass die Produkte einfach abgetrennt werden können.

Bei einer beispielhaften Verbrennung in Wasser kann das feste Reaktionsprodukt bei Verwendung von Alkalimetallen als elektropositivem Metall (z.B. LiOH, NaOH, KOH) in Wasser sehr gut löslich sein (Löslichkeit in H₂O: NaOH 1090 g/l; KOH 1120 g/l, LiOH 128 g/l) und kann so im Prozess leicht von den gasförmigen Produkten getrennt werden.

Somit kann gemäß bestimmten Ausführungsformen neben einer Energiespeicherung und Umwandlung auch ein Wertstoff in der abgeführten Flüssigkeit, die als Lösung oder Suspension abgeführt werden kann, erhalten werden, z.B. bei einer gleichzeitigen Herstellung von NaOH, LiOH, KOH. Die entsprechenden Bildungsenthalpien für ausgewählte Alkalimetalle als elektropositives Metall bei der Reaktion mit Wasser bzw. Kohlendioxid sind in Tabelle 1 gezeigt.

**Tabelle 1: Beispielhafte Bildungsenthalpien bei der Reaktion mit Wasser und Kohlendioxid**

| Verbrennungsgleichungen | Reaktionsenthalpie kJ/mol | Enthalpie kJ/mol |
|---|---|---|
| 2 Na + 2 H₂O → 2 NaOH + H₂ | -281 | -140 |
| 2 K + 2 H₂O → 2 KOH + H₂ | -279 | -139 |
| 2 Li + 2 H₂O → 2 LiOH + H₂ | -404 | -202 |
| 2 Na + 2 CO₂ → Na₂CO₃ + CO | -432 | -216 |
| 2 K + 2 CO₂ → K₂CO₃ + CO | -473 | -236 |
| 2 Li + 2 CO₂ → Li₂CO₃ + CO | -539 | -270 |

Beispielhafte Reaktionen mit Schwefeloxiden sind wie folgt:
6 Li + SO₂ → Li₂S + 2 Li₂O
8 Li + SO₃ → Li₂S + Li₂O
Li₂O + SO₂ → Li₂SO₃ - 438.7 kJ/mol

Die bei diesen Reaktionen entstehenden gasförmigen Produkte Wasserstoff bzw. Kohlenmonoxid, wie auch ggf. andere gasförmige Produkte in anderen Flüssigkeiten, können darüber hinaus als Wertstoffe abgeführt bzw. auch weiterverwendet werden, wie beispielsweise CO und H₂ bei einer Fischer-Tropsch-Synthese. Bei einer Umsetzung von elektropositivem Metall, z.B. Lithium, mit Kohlendioxid können also beispielsweise Metallcarbonat, z.B. Lithiumcarbonat und Kohlenmonoxid entstehen, wobei aus dem Kohlenmonoxid höherwertige, beispielweise auch längerkettige, kohlenstoffhaltige Produkte wie Methan, Ethan, etc. bis hin zu Benzin, Diesel, aber auch Methanol, etc. gewonnen werden können, beispielsweise in einem Fischer-Tropsch-Verfahren.

Es kann daneben beispielsweise bei einer Reaktion von elektropositivem Metall, beispielsweise Lithium, mit Stickstoff unter anderem Metallnitrid, wie Lithiumnitrid, entstehen, welches dann später zu Ammoniak weiterreagieren gelassen werden kann.

Analoge Reaktionen können sich auch für die anderen genannten Metalle ergeben.

Gemäß bestimmten Ausführungsformen ist die Flüssigkeit ausgewählt aus der Gruppe, bestehend aus Wasser und superkritischen Flüssigkeiten wie Kohlendioxid und Schwefeloxiden.

Als eine superkritische Flüssigkeit bzw. ein superkritisches Fluid wird hierbei eine Flüssigkeit oder ein Gas verstanden, die bzw. das sich oberhalb des kritischen Drucks und der kritischen Temperatur befindet.

Erfindungsgemäß muss das elektropositivem Metall in der Flüssigkeit nicht vollständig reagiert sein, bevor die bei der Reaktion von elektropositivem Metall und Flüssigkeit entstehende Lösung oder Suspension abgeführt wird, jedoch reagiert das elektropositive Metall gemäß bestimmten Ausführungsformen bevorzugt im Wesentlichen vollständig bzw. vollständig, bevor die bei der Reaktion von elektropositivem Metall und Flüssigkeit entstehende Lösung oder Suspension abgeführt wird. Gemäß bestimmten Ausführungsformen reagiert das elektropositive Metall vor der Abfuhr der Lösung oder Suspension zumindest zu 90 mol.%, weiter bevorzugt zu mindestens 95 mol.% und zudem bevorzugt zu mindestens 99 mol.% mit der Flüssigkeit.

Das Verdüsen und/oder das Zerstäuben des elektropositiven Metalls sind erfindungsgemäß nicht besonders beschränkt und können auf geeignete Weise erfolgen, beispielsweise durch übliche Düsen bzw. Zerstäuber, beispielsweise eine Flüssigmetall-Sinterdüse, aber auch durch Verdüsen/Zerstäuben durch offenporige Strukturen wie einen Porenbrenner. Auch können sowohl ein Zerstäuben wie auch ein Verdüsen des elektropositiven Metalls, beispielsweise durch verschiedene Zuführeinrichtungen mit Düsen bzw. Zerstäubern, in den Reaktionsraum hinein stattfinden. So ist beispielsweise für die Erdalkalimetalle, insbesondere Ca und/oder Mg, ein Zerstäuben als Pulver gemäß bestimmten Ausführungsformen bevorzugt. Für Alkalimetalle ist ein Verdüsen, bevorzugt als Flüssigkeit, bevorzugt.

Es ist erfindungsgemäß nicht ausgeschlossen, dass die Flüssigkeit weitere Bestandteile aufweist, beispielsweise verschiedene Zusätze zur Stabilisierung der Flüssigkeit, insbesondere Entschäumer oder andere Zusätze wie Kristallisationshilfsmittel zur Einstellung bestimmter Produkteigenschaften (Morphologie).

Durch die Zufuhr des elektropositiven Metalls unterhalb der Flüssigkeitsoberfläche können die bei der Reaktion von elektropositivem Metall und Flüssigkeit entstehenden festen und flüssigen Produkte und ggf. gasförmigen Produkte direkt in Lösung oder Suspension gehen und somit eine aufwändige Abtrennung hiervon vermieden werden, was die Reaktionsführung und den Aufbau der Vorrichtung erleichtert. Durch das Einbringen unterhalb der Flüssigkeitsoberfläche kann zudem sichergestellt werden, dass das elektropositive Metall nicht mit dem über der Flüssigkeitsoberfläche befindlichen Gasraum in Kontakt kommt und es somit zu Nebenreaktionen kommt. Zudem kann durch das Einbringen in die Flüssigkeit die bei der Reaktion entstehende Wärme gut abgeführt werden, was die Reaktionsführung weiterhin erleichtert. Durch Verdampfen der Flüssigkeit kann hierbei gemäß bestimmten Ausführungsformen zudem der Dampfdruck im System erhöht werden. Durch die erfindungsgemäße Reaktionsführung kann somit auch eine effiziente Umwandlung der bei der exothermen Reaktion freiwerdenden thermischen Energie in beispielsweise Elektrizität oder thermische Energie für beispielsweise Fernwärme ermöglicht werden. Durch die Reaktion in Flüssigkeit können zudem chemische Wertprodukte erzeugt werden, die der Vorrichtung auf einfache Weise entnommen werden können.

Für eine verbesserte Abfuhr der bei der Reaktion entstehenden Wärme kann im Reaktor ein Rührer oder eine andere Einrichtung zum Vermischen und Verteilen der Flüssigkeit, wie beispielsweise mehrere Zufuhrdüsen für Flüssigkeit, vorgesehen sein, der bzw. die eine gute Vermischung der Flüssigkeit mit dem elektropositiven Metall wie auch den entstehenden Produkten gewährleisten können. Auf diese Weise kann auch eine gezielte Abfuhr der Reaktionswärme und fester Produkte erzielt werden, so dass in bestimmten Ausführungsformen erwärmte, konzentriertere Lösungen von Reaktionsprodukten gezielt abgeführt werden. Entsprechende Rühr- bzw. Mischungseinrichtungen mit entsprechenden Strömungsgeometrien können abhängig vom Aufbau des Reaktors, der Zufuhreinrichtungen, etc., geeignet vorgesehen werden.

Gemäß bestimmten Ausführungsformen wird das elektropositive Metall mit Hilfe eines Porenbrenners und/oder einer Düse verdüst und/oder zerstäubt.

Die Düse und/oder der Porenbrenner sind hierbei nicht besonders beschränkt und können abhängig von den Umständen wie beispielsweise dem Aggregatszustand des elektropositiven Metalls und der Art der Flüssigkeit und weiteren Eigenschaften wie beispielsweise dessen Vernetzungsverhalten geeignet gewählt werden.

Eine Verdüsung bzw. Zerstäubung des elektropositiven Metalls kann hierbei auf geeignete Weise erfolgen und ist nicht besonders beschränkt. Ebenso ist die Art der Düse nicht besonders beschränkt und kann Einstoff- wie auch Zweistoffdüsen umfassen. Gemäß bestimmten Ausführungsformen wird das elektropositive Metall, bevorzugt als Flüssigkeit, verdüst. Es ist aber auch eine Verdüsung von Partikeln des elektropositiven Metalls möglich. Eine effizientere Verdüsung kann jedoch durch Verwendung des elektropositiven Metalls als Flüssigkeit erzielt werden, wobei auch gegebenenfalls durch die Temperatur des elektropositiven Metalls eine Selbstzündung der Verbrennungsreaktion bzw. Reaktion mit der Flüssigkeit möglich sein kann, so dass keine Zündquelle erforderlich ist. So dies nicht der Fall ist, kann auch eine Zündquelle zum zumindest zeitweiligen Zünden des elektropositiven Metalls vorgesehen sein, die nicht besonders beschränkt ist, um die Reaktion mit der Flüssigkeit beispielsweise zu starten. Beispielsweise können ein Lichtbogen, Laser, eine Plasmadüse, etc. zum Zünden des elektropositiven Metalls verwendet werden.

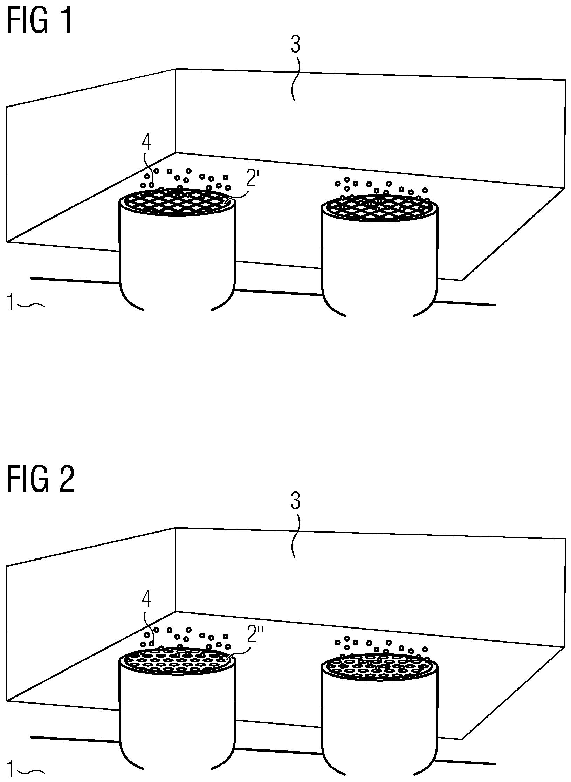

Beispielhafte Düsen bzw. Düsengeometrien sind in Figuren 1 bis 4 gezeigt.

In Figuren 1 und 2 sind beispielhaft zwei verschiedene Geometrien für Metall-Sinterdüsen gezeigt, denen das elektropositive Metall 1, bevorzugt flüssig, von unten bzw. der Seite, je nach Ansicht, zugeführt wird und durch diese der Flüssigkeit 3 zugeführt wird. Nahe dem Düsenaustritt befindet sich hierbei der Reaktionsbereich 4. In Figur 1 ist eine Siebdüse 2' gezeigt, bei der das elektropositive Metall durch das Sieb am Düsenaustritt, das nicht besonders beschränkt ist, in die Flüssigkeit verdüst wird, während in Figur 2 der Austritt des elektropositiven Metalls durch ein Lochblech erfolgt, so dass die Düse einer Lochblechdüse 2" entspricht.

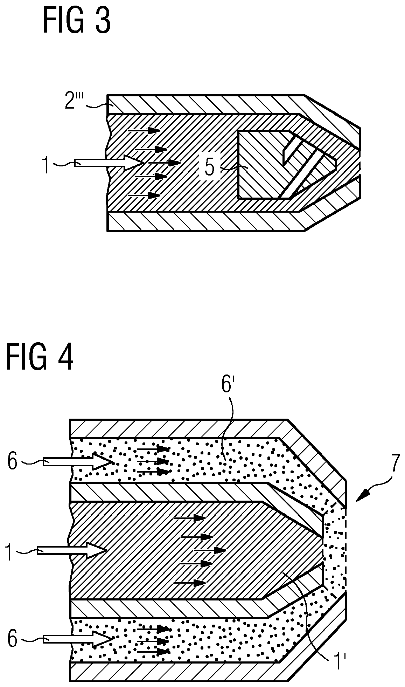

Weitere Düsen mit unterschiedlichen Zufuhrgeometrien des elektropositiven Metalls, die auch in den oben genannten Düsen wie auch beliebigen anderen Düsen verwendet werden können, sind in Figuren 3 und 4 gezeigt.

Bei der in Figur 3 gezeigten Einstoffdüse findet im Düsenkörper 2'" eine Verwirbelung des elektropositiven Metalls 1 durch einen Düsendrallkörper 5 statt, der in seiner Ausgestaltung nicht auf die hier dargestellte Form beschränkt ist, um eine bessere Zerstäubung des elektropositiven Metalls am Düsenaustritt zu erzielen.

In der in Figur 4 gezeigten Zweistoffdüse wird diese Verwirbelung bzw. Verteilung des elektropositiven Metalls 1 durch Zumischen eines Zerstäubungsgases 6 in einem Zerstäubungsgaskanal 6' erreicht, während das elektropositive Metall 1 durch den Metallkanal 1' erfolgt. Durch entsprechendes Einstellen der Düsengeometrie und der Kanäle, die auch in ihrer Lage vertauscht sein können, kann am Düsenaustritt 7 eine gute Zerstäubung gewährleistet werden. Bei der Zweistoffdüse kann beispielsweise im Fall der Verbrennung in flüssigem oder superkritischem CO₂, CO₂ selbst als Zerstäubungsmedium genutzt werden, das Zerstäubungsgas also der Flüssigkeit als Stoff entsprechen.

Das Zerstäubungsgas ist aber erfindungsgemäß nicht besonders beschränkt und kann auch abhängig vom gewünschten Produkt gewählt werden. Als Zerstäubungsgas kommen beispielsweise Luft, Kohlenmonoxid, Kohlendioxid, Sauerstoff, Methan, Wasserstoff, Wasserdampf, Stickstoff, Distickstoffmonoxid, Gemische von zwei oder mehreren dieser Gase, etc. zur Anwendung.

Neben den verschiedenen Düsen können auch verschiedene Arten von Porenbrennern, beispielsweise ein poröses Rohr, bzw. auch Arten von Mischformen zur Zerstäubung bzw. Verdüsung des elektropositiven Metalls dienen. Beispielhaft hierfür wäre ein mit parallelen Kapillaren versehenes Rohr, bei dem die Kapillaren in Längsrichtung zum Verdüsen vorgesehen sind. Mögliche Ausführungsformen können aber auch andere von Kapillaren längs oder quer (radial) durchlaufene Vorrichtungen sein, die aus einem Material bestehen, das beständig gegenüber dem elektropositiven Metall ist. In solchen Düsen bzw. Zerstäubern kann beispielsweise flüssiges Alkalimetall am Ende der Kapillaren in den Reaktor unterhalb der Wasseroberfläche eintreten. Poröse Düsen sind beispielsweise von der Exxentis AG, Schweiz, erhältlich.

Gemäß bestimmten Ausführungsformen wird das elektropositive Metall, bevorzugt als Flüssigkeit, in einen Porenbrenner geleitet und mit Hilfe des Porenbrenners verdüst. Eine innere Mischung wie in einem klassischen Porenbrenner findet jedoch gemäß bestimmten Ausführungsformen nicht statt, um eine Verstopfung der Poren durch feste Reaktionsprodukte zu vermeiden. Gemäß bestimmten Ausführungsformen ist der Porenbrenner somit ein Porenbrenner ohne Innenmischung. Die Poren dienen bei der Verwendung des Porenbrenners gemäß bestimmten Ausführungsformen einzig zur Oberflächenvergrößerung des elektropositiven Metalls. Bei kontinuierlicher Zufuhr des elektropositiven Metalls kann eine Reaktion mit der Flüssigkeit am Ausgang der Poren nahe der Oberfläche des Porenbrenners stattfinden, soweit gewährleistet werden kann, dass entstehende Reaktionsprodukte durch nachgefördertes elektropositives Metall aus dem Porenbrenner gefördert wird. Dies ist aber auch möglich, wenn die entstehenden Produkte in der Flüssigkeit löslich sind und durch Lösen von den Poren abgeführt werden können.

Bei der Verwendung des Porenbrenners ergibt sich weiterhin der Vorteil, dass sich die Reaktion am Porenbrenner lokalisieren lässt, wobei auch die Reaktionsprodukte am oder nahe dem Porenbrenner anfallen, so dass die Reaktion lokalisiert ist und entsprechend die Reaktion leichter gesteuert werden kann.

Der Porenbrenner ist in seiner Form nicht besonders beschränkt und umfasst gemäß bestimmten Ausführungsformen ein poröses Rohr als Brenner. Gemäß bestimmten Ausführungsformen umfasst der Porenbrenner ein poröses Rohr, dem an mindestens einer Öffnung das elektropositive Metall zugeführt werden kann. Bevorzugt wird das elektropositive Metall nur durch eine Öffnung des Rohres zugeführt und das andere Ende des Rohres ist verschlossen oder besteht ebenfalls aus dem Material des porösen Rohres. Das poröse Rohr kann hierbei beispielsweise ein poröses Metallrohr, beispielsweise aus Eisen, Chrom, Nickel, Niob, Tantal, Molybdän, Wolfram, Zirkalloy und Legierungen dieser Metalle, sowie Stähle wie Edelstahl und Chrom-Nickel-Stahl, sein. Bevorzugt besteht der Porenbrenner aus einem Material, das ausgewählt ist aus der Gruppe, bestehend aus Eisen, Chrom, Nickel, Niob, Tantal, Molybdän, Wolfram, Zirkalloy und Legierungen dieser Metalle, sowie Stähle wie Edelstahl und Chrom-Nickel-Stahl. Geeignet sind beispielsweise austenitische Chrom-Nickel-Stähle, welche beispielsweise sehr resistent gegen Abtragung durch Natrium bei hoher Temperatur sind, doch auch Werkstoffe mit 32% Nickel und 20% Chrom, wie AC 66, Incoloy 800 oder Pyrotherm G 20132 Nb, zeigen noch ein relativ günstiges Korrosionsverhalten. Die weiteren Bestandteile des Porenbrenners sind nicht weiter beschränkt und können ggf. eine Zündquelle, etc. umfassen.

Gemäß bestimmten Ausführungsformen wird dem Porenbrenner das elektropositive Metall als Flüssigkeit im Inneren des Porenbrenners zugeführt. Dies führt zu einer besseren Verteilung des elektropositiven Metalls im Porenbrenner und einem gleichmäßigeren Austritt des elektropositiven Metalls aus den Poren des porösen Rohres, so dass eine gleichmäßigere Reaktion zwischen elektropositivem Metall und Flüssigkeit stattfinden kann. Die Verbrennung von elektropositivem Metall und Flüssigkeit kann beispielsweise über die Porengröße der Poren des Rohres, dem verwendeten elektropositivem Metall, dessen Dichte - die mit der Temperatur des elektropositiven Metalls zusammenhängen kann, dem Druck, mit dem das elektropositive Metall in den Porenbrenner eingebracht wird, dem Druck der Flüssigkeit, etc., geeignet gesteuert werden. Das elektropositive Metall kann beispielsweise in das poröse Rohr eingepresst werden, beispielsweise auch unter Zuhilfenahme eines weiteren, unter Druck stehenden Gases, welches nicht beschränkt ist, so lange es nicht mit dem elektropositiven Metall reagiert, beispielsweise ein inertes Gas.

Die Flüssigkeit kann bei der Reaktion gemäß bestimmten Ausführungsformen zumindest teilweise verdampft und die verdampfte Flüssigkeit durch Zufuhr von Flüssigkeit ersetzt werden.

Die Menge an verdampfter Flüssigkeit kann hierbei von der Art des elektropositiven Metalls und der Flüssigkeit sowie deren Eigenschaften wie Schmelz- oder Siedetemperatur, Art der Reaktion, etc. abhängen wie auch von der Beschaffenheit der Zufuhr des elektropositiven Metalls, des Reaktoraufbaus, etc., und kann geeignet bestimmt werden.

Gemäß bestimmten Ausführungsformen wird die Menge an Flüssigkeit, die verdampft, durch die gleiche Menge an Flüssigkeit durch Zufuhr ersetzt, es ist jedoch nicht ausgeschlossen, dass zumindest zeitweise auch einmal mehr oder weniger Flüssigkeit nachgeführt wird, um die Menge an Flüssigkeit im Reaktor anders einzustellen und somit ggf. auch auf die Reaktion, beispielsweise hinsichtlich der Wärmeabfuhr, Einfluss zu nehmen. Es ist hierbei jedoch darauf zu achten, dass die Zufuhr des elektropositiven Metalls selbst bei geändertem Stand an Flüssigkeit im Reaktor innerhalb der Flüssigkeit, also unterhalb der Flüssigkeitsoberfläche, stattfindet. Gemäß bestimmten Ausführungsformen kann die Menge an zugeführter Flüssigkeit also gesteuert werden. Die Steuerung kann hierbei beispielsweise unter Verwendung von verschiedenen Ventilen in den jeweiligen Zufuhren von elektropositivem Metall und/oder Flüssigkeit erfolgen, wobei gemäß bestimmten Ausführungsformen auch die Menge an Flüssigkeit im Reaktor erfasst werden kann, beispielsweise mit Sensoren wie pH-Sensoren, IR-Sensoren, kapazitive Füllstandsensoren, Ultraschallsensoren, weitere optische Sensortypen, etc.

Gemäß bestimmten Ausführungsformen werden die verdampfte Flüssigkeit und/oder bei der Reaktion von elektropositivem Metall und Flüssigkeit entstehende gasförmige Produkte - wobei die gasförmigen Produkte und/oder die verdampfte Flüssigkeit unter erhöhtem Druck stehen können, beispielsweise mehr als 1 bar, wenigstens 2 bar, wenigstens 5 bar oder wenigstens 20 bar - zumindest teilweise zur Herstellung chemischer Produkte verwendet, z.B. CO und/oder H₂O und/oder H₂ bei einer Fischer-Tropsch-Synthese, und/oder wird die Energie der verdampften Flüssigkeit und/oder bei der Reaktion entstehenden gasförmigen Produkte zumindest teilweise umgewandelt, bevorzugt in thermische und/oder elektrische Energie, weiter bevorzugt unter Verwendung zumindest einer Expanderturbine und/oder mindestens einer Dampfturbine und/oder mindestens eines Wärmetauschers und/oder mindestens eines Boilers, ggf. in Verbindung mit mindestens einem Generator.

Gemäß bestimmten Ausführungsformen wird die Flüssigkeit während oder nach der Reaktion zumindest teilweise als Lösung oder Suspension abgeführt und die Energie der abgeführten Lösung oder Suspension zumindest teilweise umgewandelt, bevorzugt unter Verwendung mindestens eines Wärmetauschers und/oder mindestens eines Boilers, ggf. in Verbindung mit mindestens einem Generator.

Aus der abgeführten Lösung oder Suspension kann gemäß bestimmten Ausführungsformen die Flüssigkeit zumindest teilweise abgetrennt und zur Reaktion zurückgeführt werden.

Eine zumindest teilweise Umwandlung der Energie der abgeführten Lösung oder Suspension einerseits und der verdampften Flüssigkeit und/oder bei der Reaktion entstehenden gasförmigen Produkte andererseits umfasst jegliche zumindest teilweise Umwandlung der bei der Reaktion von elektropositivem Metall und Flüssigkeit freigesetzten und/oder vorhandenen Energie, beispielsweise thermische und/oder kinetische Energie, in eine weitere Energieform z.B. Strom, Prozessdampf oder Fernwärme. Beispielsweise kann die Energie in thermische Energie eines anderen Mediums wie Wasser in beispielsweise einem Wärmetauscher oder in elektrische Energie umgewandelt werden. Die Menge der umgewandelten Energie kann hierbei von verschiedenen Faktoren wie Wirkungsgraden der verwendeten Einrichtungen zur Umwandlung, ggf. Energieverlusten im System, der Steuerung der Reaktion und der Stoffströme, etc., abhängen.

Die zumindest teilweise Umwandlung von Energie ist nicht besonders beschränkt und kann beispielsweise die Umwandlung in thermische und/oder elektrische Energie umfassen. Gemäß bestimmten Ausführungsformen wird mit dem erfindungsgemäßen Verfahren und der erfindungsgemäßen Vorrichtung zumindest elektrische Energie hergestellt.

Die bei der Verbrennung frei werdende thermischer Energie kann also (beispielsweise über eine Expanderturbine und/oder Dampfturbine) in elektrischer Energie umgewandelt werden. Die frei werdende thermische Energie kann beispielsweise über einen Wärmetauscher und anschließender Dampfturbine rückverstromt werden. Höhere Effizienzen sind beispielsweise durch den Einsatz von Gasturbinen in Kombination mit Dampfturbinen erreichbar. Dafür ist gemäß bestimmten Ausführungsformen zu gewährleisten, dass das Abgas nach der Metallverbrennung partikelfrei ist, da diese Partikel sonst die Turbine langfristig beschädigen können.

Die bei der Reaktion entstehenden gasförmigen Produkte (beispielsweise CO bei der Verbrennung in CO₂) können gemäß bestimmten Ausführungsformen weiter verwertet werden. Es ist bevorzugt, dass die verdampfte Flüssigkeit und/oder bei der Reaktion entstehende gasförmige Produkte frei von festen Partikeln sind und dann beispielsweise über eine Expanderturbine unter Druck geführt werden können, was durch entsprechende Reaktion in der Flüssigkeit erzielt werden kann.

Bei der Reaktion des elektropositiven Metalls mit der Flüssigkeit kann gemäß bestimmten Ausführungsformen neben der Reaktionsenergie auch Solvatationsenergie bzw. Hydratationsenergie und/oder Gitterenergie freiwerden, beispielsweise bei der Bildung von Hydraten in Waser. Beispielsweise kann bei dem Abbrandprodukt LiOH, welches gut wasserlöslich ist, die Hydrationsenergie frei werden (Lithium -509 kJ/mol).

Dies hängt hierbei von den verwendeten elektropositiven Metallen und der verwendeten Flüssigkeit ab.

Eine beispielsweise als Flüssigkeit entnommene Hydroxidlösung aus der Reaktion mit Wasser, beispielsweise Alkalihydroxidlösung, kann vielfältige weitere Aufgaben übernehmen. Auch kann aus dieser wieder auf geeignete Weise das elektropositive Metall rückgewonnen werden. So ergeben sich beispielsweise für Li über eine Li₂CO₃-Rückführung in LiCl, wie z.B. in US 20130001097 A1 angegeben, und eine anschließende Elektrolyse zu Li vollständig rezyklierbare Energiekreisläufe. Bei Verwendung von beispielsweise Ca als elektropositives Metall kann entstehende Ca(OH)₂ zur Entschwefelung herkömmlicher fossiler Kraftwerke dienen.

Eine Abtrennung von verdampfter Flüssigkeit aus den gasförmigen Bestandteilen, welche gemäß bestimmten Ausführungsformen erfolgen kann, um diese als Flüssigkeit rückzuführen, ist nicht besonders beschränkt und kann auf geeignete Weise erfolgen. Beispielsweise kann Wasser kondensiert werden. Ggf. können verdampfte Flüssigkeit und/oder bei der Reaktion entstehende gasförmige Produkte wie beispielsweise Wasser, Wasserstoff, oder Kohlendioxid auch in die Umwelt abgelassen werden, z.B. unter ökonomischen Gesichtspunkten.

Die zumindest teilweise Umwandlung der Energie aus der abgeführten Lösung oder Suspension, welche beispielsweise Temperaturen von 300 °C oder mehr haben können, kann gemäß bestimmten Ausführungsformen unter Zuhilfenahme mindestens eines Wärmetauschers erfolgen. Dieser kann dann beispielsweise thermische Energie bereitstellen. Es ist auch möglich, dass im Wärmetauscher beispielsweise Dampf erzeugt wird, der beispielsweise eine Turbine und einen Generator antreibt, um elektrische Energie zu erzeugen. Es ist auch möglich, dass unter Zuhilfenahme des Wärmetauschers sowohl thermischer Energie als auch elektrische Energie erzeugt werden. Die thermische Energie kann beispielsweise zum Vorheizen des elektropositiven Metalls und/oder der Flüssigkeit vor der Reaktion dienen, so dass beispielsweise das elektropositive Metall auch flüssig zur Verfügung gestellt werden kann. Die thermische Energie kann aber auch für andere Zwecke wie beispielsweise Fernwärme verwendet werden. Die gewonnene elektrische Energie kann auch auf geeignete Weise verwendet werden, beispielsweise zur Stromversorgung.

Gemäß bestimmten Ausführungsformen erfolgt die zumindest teilweise Umwandlung der Energie der verdampften Flüssigkeit und/oder bei der Reaktion entstehenden gasförmigen Produkte in elektrische Energie durch mindestens eine Turbine und mindestens einen Generator. Die Art der Turbine und des Generators sind hierbei, wie auch oben im Falle des Wärmetauschers, nicht besonders beschränkt. Gemäß bestimmten Ausführungsformen können mindestens zwei in Strömungsrichtung der verdampften Flüssigkeit und/oder bei der Reaktion entstehenden gasförmigen Produkte hintereinander gelegene Turbinen bei der zumindest teilweisen Umwandlung der Energie verwendet werden, beispielsweise auch eine Expanderturbine und eine Dampfturbine. So kann beispielsweise zunächst eine Energieumwandlung mit einer Gasturbine durch die Verbrennung einer Komponente erfolgen und danach die gasförmigen Bestandteile in einer Dampfturbine zur Energieumwandlung verwendet werden, d.h. die gasförmigen Bestandteile durchlaufen hintereinander (der Reihe nach) zwei oder auch mehr Turbinen.

Zusätzlich zur zumindest teilweisen Umwandlung der Energie der verdampften Flüssigkeit und/oder der bei der Reaktion entstehenden gasförmigen Produkte kann auch eine chemische Nutzung der entstandenen Gase wie CO und/oder H₂ ermöglicht werden. So kann beispielsweise mit den gasförmigen Produkten, ggf. nach erfolgtem Waschen, beispielsweise zum Auswaschen von CO₂, und/oder Trocknen der gasförmigen Bestandteile eine Zuführung zu einer Fischer-Tropsch-Synthesevorrichtung erfolgen, wo aus dem Synthesegas umfassend CO und H₂ höherwertige chemische Produkte wie Methanol, Ethanol, Kohlenwasserstoffe etc. hergestellt werden können. Gegebenenfalls kann hierzu auch H₂ und/oder CO und/oder H₂O aus externen Quellen zu den gasförmigen Bestandteilen zugeführt werden. Eine Gaswäsche kann beispielsweise mit Wasser und/oder einer Lösung und/oder Suspension eines Salzes des elektropositiven Metalls, beispielsweise LiOH, erfolgen.

Im Gegensatz zu aus Kohle oder Erdgas hergestelltem Synthesegas enthalten die in den obigen Ausführungsformen hergestellten Gase keine stickstoff- oder schwefelenthaltenen Verunreinigen wie NH₃, HCN, H₂S, COS oder Sauerstoff, die sehr aufwändig abgetrennt werden müssen. Als Verunreinigung muss gegebenenfalls nur CO₂ abgetrennt werden. Da in der Anlage auch Hydroxid zur Verfügung steht, kann dieses dann zum Waschen von CO₂ genutzt werden. Ein derartiger Wäscher ist sehr effektiv.

Nach einer ggf. erfolgenden Trocknung der Gase kann ein hochreines Synthesegasgemisch mit einstellbarem CO/H₂-Verhältnis zur Verarbeitung nach Fischer-Tropsch erhalten werden. Je nach Katalysator sind beispielsweise Methanol oder Kohlenwasserstoffe erhältlich.

Vorliegend ist es also gemäß bestimmten Ausführungsformen möglich, ein erfindungsgemäßes Verfahren mit einem gasförmigen Produkt zu betreiben, dass nur CO₂ oder H₂O enthält, so dass bei einer chemischen Nutzung der gasförmigen Bestandteile die andere Gaskomponente des Synthesegases bereitgestellt werden muss, beispielsweise auch aus einem Zwischenspeicher, wenn eine erfindungsgemäße Vorrichtung wechselweise mit einer Flüssigkeit umfassend H₂O und einer Flüssigkeit umfassend CO₂ betrieben werden und die entstehenden gasförmigen Produkte entsprechend abgetrennt und zwischengespeichert werden.

Es können auch zwei erfindungsgemäße Vorrichtungen mit zwei erfindungsgemäßen Verfahren parallel betrieben werden, wobei in einem Verfahren eine Flüssigkeit umfassend CO₂ eingesetzt wird und im anderen eine Flüssigkeit umfassend H₂O, und die erzeugten gasförmigen Bestandteile können dann geeignet kombiniert werden für eine Fischer-Tropsch Synthese.

Gemäß einem weiteren Aspekt betrifft die Erfindung eine Vorrichtung zur Reaktion eines elektropositiven Metalls mit einer Flüssigkeit, wobei das elektropositive Metall ausgewählt ist aus Alkali-, Erdalkalimetallen, Aluminium und Zink, sowie Legierungen und/oder Mischungen derselben, umfassend einen Reaktor, in dem die Reaktion zwischen dem elektropositiven Metall und der Flüssigkeit stattfindet, mindestens einen Porenbrenner und/oder mindestens eine Einrichtung zum Verdüsen und/oder Zerstäuben des elektropositiven Metalls in die Flüssigkeit am und/oder im Reaktor, mindestens eine erste Zuführeinrichtung für das elektropositive Metall zum Inneren des Porenbrenners und/oder zur Einrichtung zum Verdüsen und/oder Zerstäuben des elektropositiven Metalls, die derart ausgebildet ist, dem Inneren des Porenbrenners und/oder der Einrichtung zum Verdüsen und/oder Zerstäuben des elektropositiven Metalls das elektropositive Metall zuzuführen,
mindestens eine zweite Zuführeinrichtung für die Flüssigkeit am und/oder im Reaktor, die derart ausgebildet, die Flüssigkeit dem Reaktor zuzuführen,
mindestens eine erste Abführeinrichtung für die bei der Reaktion von elektropositivem Metall und Flüssigkeit entstehende Lösung oder Suspension, die derart ausgebildet ist, die bei der Reaktion von elektropositivem Metall und Flüssigkeit entstehende Lösung oder Suspension aus dem Reaktor abzuführen, mindestens eine zweite Abführeinrichtung für gasförmige Produkte, die derart ausgebildet ist, zumindest teilweise verdampfte Flüssigkeit und/oder bei der Reaktion von elektropositivem Metall und Flüssigkeit entstehende gasförmige Produkte aus dem Reaktor abzuführen, und
eine Steuereinrichtung, die derart ausgebildet ist, die Flüssigkeit dem Reaktor derart zuzuführen, dass der mindestens einen Porenbrenner und/oder die mindestens eine Einrichtung zum Verdüsen und/oder Zerstäuben des elektropositiven Metalls sich im Reaktor in der Flüssigkeit unterhalb der Flüssigkeitsoberfläche befinden.

Der Reaktor ist hinsichtlich dessen Aufbaus und Material, etc. nicht besonders beschränkt, solange die entsprechende Reaktion darin ablaufen kann. Abhängig von der Art, Beschaffenheit (z.B. Temperatur, Druck) und/oder Menge jeweils der Flüssigkeit und des elektropositiven Metalls, etc., können diese entsprechend ausgestaltet sein. Ebenso sind die Trenneinrichtungen, Zuführeinrichtungen, Verdüsungseinrichtungen, ggf. Abführeinrichtungen und Rückführeinrichtungen, etc., nicht besonders beschränkt.

Die Einrichtung zum Verdüsen und/oder Zerstäuben des elektropositiven Metalls ist hierbei nicht besonders beschränkt und kann beispielsweise eine Einstoffdüse oder eine Zweistoffdüse umfassen, die wie oben beschrieben ausgestaltet sein können, oder auch eine oben beschriebene Metall-Sinterdüse. Der Porenbrenner kann wie oben beschrieben ausgestaltet sein.

Als erste Zuführeinrichtung für das elektropositive Metall können beispielsweise Rohre oder Schläuche, oder aber Förderbänder, dienen, die beheizt sein können, welche geeignet, beispielsweise anhand des Aggregatszustands der des elektropositiven Metalls, bestimmt werden können. So werden die Erdalkalimetalle, z.B. Mg und Ca, beispielsweise gemäß bestimmten Ausführungsformen in Partikelform, beispielsweise als Pulver, zugeführt, während Li beispielsweise als Flüssigkeit zugeführt werden kann. Gegebenenfalls kann an die erste Zuführeinrichtung für das elektropositive Metall auch eine weitere Zuführeinrichtung für ein Zerstäubungsgas oder eine weitere Zuführeinrichtung für ein weiteres Gas zum Einbringen des elektropositiven Metalls, optional mit einer Steuereinrichtung wie einem Ventil, angebracht werden, mit dem die Zufuhr des elektropositiven Metalls geregelt werden kann.

Ebenso kann die zweite Zuführeinrichtung für die Flüssigkeit als Rohr oder Schlauch, etc., das oder der gegebenenfalls beheizt sein kann, ausgebildet sein, wobei die zweite Zuführeinrichtung geeignet anhand des Zustand der Flüssigkeit, die eine superkritische Flüssigkeit sein kann, bestimmt werden kann. Auch können mehrere Zuführeinrichtungen für das elektropositive Metall oder die Flüssigkeit vorgesehen sein.

Gemäß bestimmten Ausführungsformen besteht der Porenbrenner bzw. die Einrichtung zum Verdüsen und/oder Zerstäuben aus einem Material, das ausgewählt ist aus der Gruppe, bestehend aus Eisen, Chrom, Nickel Niob, Tantal, Molybdän, Wolfram, Zirkalloy und Legierungen dieser Metalle, sowie Stähle wie Edelstahl und Chrom-Nickel-Stahl. Geeignet sind beispielsweise austenitische Chrom-Nickel-Stähle, welche beispielsweise sehr resistent gegen Abtragung durch Natrium bei hoher Temperatur sind, doch auch Werkstoffe mit 32% Nickel und 20% Chrom, wie AC 66, Incoloy 800 oder Pyrotherm G 20132 Nb, zeigen noch ein relativ günstiges Korrosionsverhalten. Diese Materialien sind bevorzugt für einen Einsatz bei höheren Temperaturen, bei denen die Reaktion mit dem elektropositiven Metall einfacher vonstattengehen kann.

Die Zuführeinrichtung für Zerstäubungsgas und/oder weiteres Gas ist ebenfalls nicht besonders beschränkt und umfasst beispielsweise Rohre, Schläuche, etc., wobei sie geeignet anhand des Zustands des Zerstäubungsgases bzw. weiteren Gases, das ggf. auch unter Druck stehen kann, bestimmt werden kann.

Gegebenenfalls kann in einer erfindungsgemäßen Vorrichtung eine Zündvorrichtung, beispielsweise eine elektrische Zündvorrichtung oder ein Plasmabogen, erforderlich sein, wobei dies von der Art und dem Zustand des elektropositiven Metalls, beispielsweise dessen Temperatur und/oder Aggregatszustand, der Beschaffenheit der Flüssigkeit, beispielsweise dessen Druck und/oder Temperatur, sowie der Anordnung von Komponenten in der Vorrichtung, wie beispielsweise der Art und Beschaffenheit der Zuführeinrichtungen, abhängen kann.

Der Reaktor ist erfindungsgemäß nicht besonders beschränkt, solange er die Flüssigkeit aufnehmen kann. Um konstruktiv sowohl eine hohe Temperatur der verdampften Flüssigkeit und/oder der bei der Reaktion von elektropositivem Metall und Flüssigkeit entstehende gasförmigen Produkte von beispielsweise mehr als 200°C, beispielsweise auch 400°C oder mehr und in bestimmten Ausführungsformen 500°C oder mehr, als auch einen erhöhten (z.B. 5 bar oder mehr) oder hohen (20 bar oder mehr) Betriebsdruck zu erreichen, kann das innere Material des Reaktors aus hochwarmfesten Legierungen bestehen, beispielsweise den oben genannten und im Extremfall auch aus dem Material Haynes 214. Um dieses Material, das lediglich der hohen Temperatur standhalten soll, kann dann eine thermische Isolierung angeordnet sein, die ausreichend wenig Wärme hindurch lässt, so dass außen eine Stahlwand, die zusätzlich auch luft- oder wassergekühlt sein kann, die Druckbelastung aufnimmt.

Darüber hinaus kann der Reaktor auch Heiz- und/oder Kühlvorrichtungen umfassen, welche am Reaktor und/oder aber auch an den verschiedenen Zuführ- und/oder Abführeinrichtungen und/oder ggf. der Zündvorrichtung, etc., vorhanden sein können. Darüber hinaus können weitere Komponenten wie Pumpen zum Erzeugen eines Drucks oder eines Vakuums, etc. in einer erfindungsgemäßen Vorrichtung vorhanden sein.

Auch sind die Abführeinrichtungen nicht besonders beschränkt, wobei beispielsweise die zweite Abführeinrichtung für gasförmige Produkte als Rohr ausgebildet sein kann, während die erste Abführeinrichtung für die bei der Reaktion von elektropositivem Metall und Flüssigkeit entstehende Lösung oder Suspension beispielsweise als Zellenradschleuse und/oder als Rohr mit einem Siphon ausgestaltet sein kann, aber auch als Rohr. Hier können auch verschiedene Ventile, wie Druckventile, und/oder weitere Regler vorgesehen sein.

Als Material für den Reaktor, die Trenneinrichtungen, Verdüsungseinrichtungen und/oder Zerstäubungseinrichtungen, Porenbrenner und/oder ggf. Abführeinrichtungen und/oder ggf. die Zuführeinrichtungen, oder aber auch beispielsweise Vorrichtungen zur Umwandlung von Energie wie Turbinen, die mit Generatoren gekoppelt sind, eignet sich gemäß bestimmten Ausführungsformen beispielsweise ein Material, das ausgewählt ist aus der Gruppe, bestehend aus Eisen, Chrom, Nickel, Niob, Tantal, Molybdän, Wolfram, Zirkonium und Legierungen dieser Metalle, sowie Stähle wie Edelstahl und Chrom-Nickel-Stahl. Diese Materialien sind bevorzugt für einen Einsatz bei höheren Temperaturen, bei denen die Reaktion mit beispielsweise flüssigem elektropositiven Metall einfacher vonstattengehen kann oder die Reaktionsmischung einfach behandelt werden kann.

Die erfindungsgemäße Vorrichtung weist eine Steuereinrichtung auf, die derart ausgebildet ist, die Flüssigkeit dem Reaktor derart zuzuführen, dass der mindestens einen Porenbrenner und/oder die mindestens eine Einrichtung zum Verdüsen und/oder Zerstäuben des elektropositiven Metalls sich im Reaktor in der Flüssigkeit unterhalb der Flüssigkeitsoberfläche befinden. Die Steuerung kann hierbei beispielsweise anhand von Messdaten oder Computersimulationen erfolgen. Die Steuereinrichtung kann beispielsweise die mindestens einen ersten Zuführeinrichtung für elektropositives Metall und/oder der mindestens einen zweiten Zuführeinrichtung für Flüssigkeit derart steuern, dass bei vermehrter Reaktion weniger elektropositives Metall oder mehr Flüssigkeit zugeführt wird, kann aber auch beispielsweise den Porenbrenner und/oder die mindestens eine Einrichtung zum Verdüsen und/oder Zerstäuben des elektropositiven Metalls steuern. Auch ist eine Temperatursteuerung für den Reaktor, die Zu- und/oder Abführeinrichtungen, etc., möglich. Die Steuereinrichtung kann hierbei beispielsweise über eine Steuerung von Düsen, beispielsweise an oder in den Zuführeinrichtungen bzw. den Reaktoren respektive die Zugabe von elektropositivem Metall und/oder Flüssigkeit steuern, oder auch die Zuführeinrichtungen selbst steuern, beispielsweise durch Steuerung von Pumpen, etc.

Gemäß bestimmten Ausführungsformen umfasst die Vorrichtung weiter eine Heizvorrichtung zum Bereitstellen des elektropositiven Metalls als Flüssigkeit, die derart ausgebildet ist, das elektropositive Metall vor oder bei der Zufuhr des elektropositiven Metalls zu verflüssigen. Die Heizeinrichtung ist hierbei nicht besonders beschränkt.

Weiterhin bestehen gemäß bestimmten Ausführungsformen der mindestens eine Porenbrenner und/oder die mindestens eine Einrichtung zum Verdüsen und/oder Zerstäuben des elektropositiven Metalls aus einem Material, das ausgewählt ist aus der Gruppe, bestehend aus Eisen, Chrom, Nickel Niob, Tantal, Molybdän, Wolfram, Zirkalloy und Legierungen dieser Metalle, sowie Stähle wie Edelstahl und Chrom-Nickel-Stahl.

Darüber hinaus umfasst die Vorrichtung gemäß bestimmten Ausführungsformen weiter mindestens eine erste Einrichtung zur Umwandlung von Energie, die mit der mindestens einen erste Abführeinrichtung für die bei der Reaktion von elektropositivem Metall und Flüssigkeit entstehende Lösung oder Suspension verbunden ist und derart ausgebildet ist, die Energie der abgeführten Lösung oder Suspension zumindest teilweise umzuwandeln. Die mindestens eine erste Einrichtung zur Umwandlung von Energie ist hierbei nicht besonders beschränkt und kann beispielsweise mindestens einen Wärmetauscher und/oder mindestens einen Boiler umfassen.

Gemäß bestimmten Ausführungsformen weist die mindestens eine erste Einrichtung zur Umwandlung von Energie mindestens einen Wärmetauscher auf. Dieser ist erfindungsgemäß nicht besonders beschränkt und kann beispielsweise auch mit mindestens einer Turbine und mindestens einem Generator zur Erzeugung elektrischer Energie gekoppelt sein, kann aber auch zusätzlich oder auch nur zur Umwandlung in thermische Energie, beispielsweise Fernwärme, oder auch zur Bereitstellung von Dampf für weitere Prozesse verwendet werden.

Falls kein geeigneter Wärmetauscher gefunden werden kann, durch den dann z.B. Luft oder Wasser mit entsprechendem Druck erwärmt werden kann, ist es möglich, beispielsweise einen Boiler zu verwenden. Der Weg unter Verwendung eines Boilers kann gemäß bestimmten Ausführungsformen aussichtsreicher sein und ist auch technisch einfacher, da er bei geringeren Temperaturen und nur erhöhtem Druck realisierbar sein kann.

Mit Hilfe eines oder mehrerer Wärmetauscher und/oder eines oder mehrerer Boiler kann dann im Anschluss elektrische Energie erzeugt werden, beispielsweise durch Verwendung einer Dampfturbine und eines Generators.

Gemäß bestimmten Ausführungsformen umfasst die Vorrichtung weiter mindestens eine zweite Einrichtung zur Umwandlung von Energie, die mit der mindestens einen zweiten Abführeinrichtung verbunden ist und derart ausgebildet ist, die Energie der zumindest teilweise verdampften Flüssigkeit und/oder bei der Reaktion von elektropositivem Metall und Flüssigkeit entstehenden gasförmigen Produkte zumindest teilweise umzuwandeln, und/oder mindestens eine Einrichtung zur Herstellung chemischer Produkte, die derart ausgebildet ist, die verdampfte Flüssigkeit und/oder die bei der Reaktion von elektropositivem Metall und Flüssigkeit entstehenden gasförmigen Produkte in weitere chemische Produkte umzuwandeln.

Die mindestens eine zweite Einrichtung zur Umwandlung von Energie ist erfindungsgemäß nicht besonders beschränkt, insofern sie die Energie aus der verdampften Flüssigkeit und/oder den bei der Reaktion von elektropositivem Metall und Flüssigkeit entstehenden gasförmigen Produkten umzuwandeln, und kann beispielsweise mindestens einen Wärmetauscher, Boiler und/oder eine Turbine umfassen. Gemäß bestimmten Ausführungsformen weist die mindestens eine zweite Einrichtung zur Umwandlung von Energie mindestens eine Turbine und mindestens einen Generator zur Erzeugung von elektrischer Energie auf. Die Turbine und der Generator sind, wie auch oben bei der Kopplung mit dem Wärmetauscher, nicht besonders beschränkt, und es können auch mehrere verschiedene Turbinen zur Anwendung kommen, die an einen oder mehrere Generatoren angeschlossen sind. Gemäß bestimmten Ausführungsformen weist die mindestens eine zweite Einrichtung zur Umwandlung von Energie mindestens zwei in Strömungsrichtung der verdampften Flüssigkeit und/oder gasförmigen Produkte hintereinander gelegene Turbinen auf.

Aus der verdampften Flüssigkeit und/oder den gasförmigen Produkten kann jedoch auch mittels eines Wärmetauschers Wärme abgeführt werden, und ein Generator ist dann nicht zwangsläufig vonnöten. Auch Kombinationen von Turbinen und Wärmetauschern sind möglich.

Gemäß bestimmten Ausführungsformen weist die erfindungsgemäße Vorrichtung mindestens eine Einrichtung zur Herstellung chemischer Produkte auf, die derart ausgebildet ist, die verdampfte Flüssigkeit und/oder die bei der Reaktion von elektropositivem Metall und Flüssigkeit entstehenden gasförmigen Produkte in weitere chemische Produkte umzuwandeln. Diese ist nicht besonders beschränkt und kann anhand der verdampften Flüssigkeit und/oder den erzeugten gasförmigen Produkten geeignet vorgesehen werden. Beispielsweise kann die erfindungsgemäße Vorrichtung gemäß bestimmten Ausführungsformen mindestens einen CO₂-Wäscher und/oder eine dritte Zuführeinrichtung für CO und/oder H₂ und/oder H₂O und/oder einen Trockner und/oder eine Fischer-Tropsch-Synthesevorrichtung aufweisen, so Wasser und/oder superkritisches Kohlendioxid als Flüssigkeit verwendet wird und H₂ oder CO als gasförmiges Produkt entsteht. Sie kann somit einer IGCC-Anlage ähneln. In solch einer Vorrichtung dient somit das elektropositive Metall mit als Brennstoff. Es können auch zwei erfindungsgemäße Vorrichtungen vorgesehen sein, von denen eine eine Flüssigkeit umfassend Wasser und die andere eine Flüssigkeit umfassend Kohlendioxid verwendet, wenn eine Fischer-Tropsch Synthese angeschlossen werden soll. Der mindestens einen CO₂-Wäscher und/oder die mindestens eine dritte Zuführeinrichtung für CO und/oder H₂ und/oder H₂O und/oder der mindestens eine Trockner und/oder die Fischer-Tropsch-Synthesevorrichtung sind erfindungsgemäß nicht besonders beschränkt und können übliche Vorrichtungen bzw. Bauteile sein.

Gemäß bestimmten Ausführungsformen umfasst die Vorrichtung weiter mindestens eine dritte Abführeinrichtung, die mit der ersten Einrichtung zur Einrichtung zur Umwandlung von Energie verbunden ist und derart ausgebildet ist, die abgeführte Lösung oder Suspension aus der ersten Einrichtung zur Einrichtung zur Umwandlung von Energie abzuführen, mindestens eine erste Trenneinrichtung, die mit der mindestens einen dritten Abführeinrichtung verbunden ist und derart ausgebildet ist, die Flüssigkeit aus der abgeführten Lösung oder Suspension abzutrennen, und mindestens eine erste Rückführeinrichtung für Flüssigkeit aus der ersten Trenneinrichtung, die mit der zweiten Zuführeinrichtung und/oder dem Reaktor verbunden ist und derart ausgebildet ist, die Flüssigkeit aus der ersten Trenneinrichtung der zweiten Zuführeinrichtung und/oder dem Reaktor zuzuführen. Die dritte Abführeinrichtung ist hierbei wie die anderen beiden Abführeinrichtungen nicht besonders beschränkt und kann entsprechend diesen mit dem entsprechenden Material ausgestaltet sein.

Gemäß bestimmten Ausführungsformen umfasst die Vorrichtung weiter mindestens eine zweite Trenneinrichtung, die derart ausgebildet ist, die Flüssigkeit und/oder die verdampfte Flüssigkeit aus der abgeführten verdampften Flüssigkeit und/oder den bei der Reaktion von elektropositivem Metall und Flüssigkeit entstehenden gasförmigen Produkte zumindest teilweise abzutrennen, und mindestens eine zweite Rückführeinrichtung für Flüssigkeit und/oder verdampfte Flüssigkeit aus der zweiten Trenneinrichtung, die mit der zweiten Zuführeinrichtung und/oder dem Reaktor verbunden ist und derart ausgebildet ist, die Flüssigkeit und/oder die verdampfte Flüssigkeit aus der zweiten Trenneinrichtung der zweiten Zuführeinrichtung und/oder dem Reaktor zuzuführen.

Die ersten und zweiten Trenneinrichtungen sind nicht besonders beschränkt, sofern in der ersten Trenneinrichtung eine zumindest teilweise Trennung in rückzuführende Flüssigkeit einerseits und abzuführendes Produkt, wie beispielsweise ein Reaktionsprodukt aus elektropositivem Metall und Flüssigkeit, andererseits erzielt werden kann und in der zweiten Trenneinrichtung verdampfte Flüssigkeit zumindest teilweise abgetrennt werden kann. Die zweite Trenneinrichtung kann hierbei sich auch in der zweiten Einrichtung zur Umwandlung von Energie befinden, und die erste Trenneinrichtung kann sich auch in der ersten Einrichtung zur Umwandlung von Energie befinden.

Die erste und zweite Rückführeinrichtung sind wie die Abführeinrichtungen ebenfalls nicht besonders beschränkt und können entsprechend diesen mit dem entsprechenden Material vorgesehen sein, also beispielsweise als Rohre oder Schläuche.

Gemäß bestimmten Ausführungsformen umfasst die Vorrichtung weiter mindestens eine Erfassungseinrichtung, die sich am und/oder im Reaktor befindet und mit der Steuereinrichtung verbunden ist, die derart ausgebildet ist, die Menge an Flüssigkeit im Reaktor zu erfassen. Die Erfassungseinrichtung ist erfindungsgemäß nicht besonders beschränkt und kann beispielsweise mindestens einen Sensor wie einen IR-Sensor oder pH-Sensor, kapazitive Füllstandsensoren, Ultraschallsensoren, weitere optische Sensortypen, etc. umfassen, welcher mit der Steuereinrichtung verbunden sein kann und anhand dessen Signal eine Steuerung in der Vorrichtung vorgenommen werden kann oder nicht.

Auch können in bestimmten Ausführungsformen die abgeführte Lösung oder Suspension Feststoffe gelöst oder suspendiert enthalten, welche weiter zu Wertstoffen umgesetzt werden können. So kann beispielsweise aus einer Verbrennung mit Stickstoff hergestelltes Metallnitrid durch Hydrolyse mit Wasser zu Ammoniak und Lauge umgesetzt werden, wobei die entstandene Lauge dann auch als Fänger für Kohlendioxid und/oder Schwefeldioxid dienen kann.

Die obigen Ausführungsformen, Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird der Fachmann auch Einzelaspekte als Verbesserungen oder Ergänzungen zu der jeweiligen Grundform der vorliegenden Erfindung hinzufügen.

Im Folgenden wird die Erfindung nunmehr anhand beispielhafter Ausführungsformen dargestellt, die die Erfindung in keiner Weise beschränken.

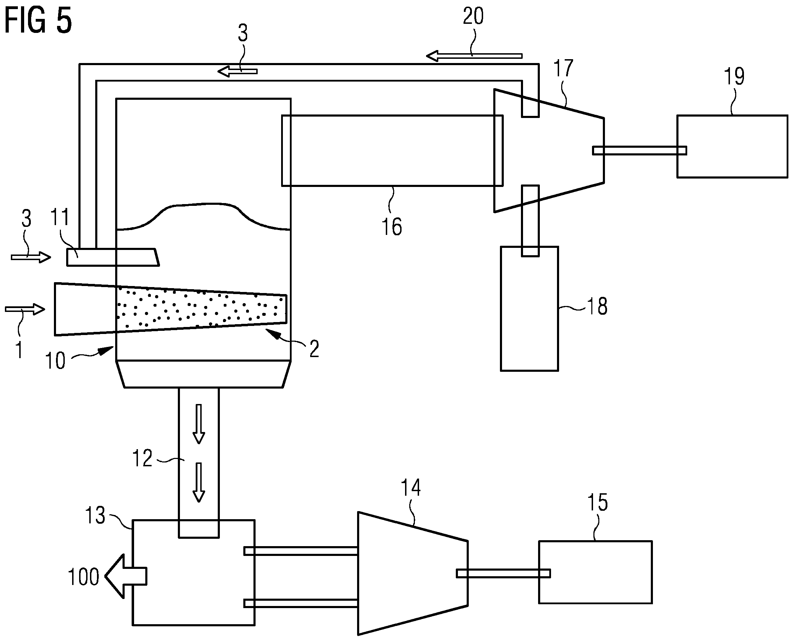

Figur 5 zeigt eine schematische Darstellung einer ersten beispielhaften Ausführungsform einer erfindungsgemäßen Vorrichtung, in der ein elektropositives Metall 1 wie hier ein beispielhaftes flüssiges Alkalimetall mittels einer porösen Sinterdüse 2 unter der Oberfläche einer Flüssigkeit 3 wie beispielsweise einer Wasseroberfläche oder der Oberfläche von flüssigem, superkritischem CO₂ oder SOₓ zur Umwandlung der im elektropositiven Metall gespeicherten chemischen Energie in elektrische Energie in einen Reaktor 10 eingebracht wird, sowie die entstehende Produktwertstoffkette mit beispielsweise H₂ oder CO, NaOH, KOH, LiOH.

In der Vorrichtung der ersten beispielhaften Ausführungsform werden folgende Schritte durchgeführt:
a) Die Zufuhr des elektropositiven Metalls 1 in den Flüssigkeitsreaktionsraum, direkt in den flüssigen Reaktionspartner (z.B. H₂O, superkritisches CO₂ oder SOₓ), ggf. unter Druck, mit Hilfe einer porösen Sinterdüse 2. Die Vorrichtung zur Druckinjektion des flüssigen elektropositiven Metalls 1 wie eines Alkalimetalls unter der Flüssigkeitsoberfläche kann auch als klassische Einstoffdüse mit oder ohne Drallelement, als Zweistoffdüse, als Lochblech, als mit Kapillaren/Löcher versehener Stab oder Platte, o.Ä. ausgeführt werden, wie oben dargelegt.
b) Im Flüssigreaktionsraum findet die Reaktion / Verbrennungsreaktion statt. Das flüssige elektropositive Metall 1 wird unter Druck in die Sinterdüse 2 eingeführt und tritt unterhalb des Flüssigkeitsspiegels durch die Poren der Sinterdüse 2 in die Flüssigkeit. An der Porenoberfläche reagiert es mit der Flüssigkeit wie Wasser, CO₂ oder SOₓ. Die Reaktion ist sehr exotherm, und die freigesetzte Wärme kann teilweise über die abgeführte Lösung, die durch die erste Abführeinrichtung 13 abgeführt wird, über einen Wärmetauscher 13 und anschließend eine Dampfturbine 14 mit angeschlossenem Generator 15 in elektrische Energie umgewandelt werden.
c) Trennung der festen Reaktionsprodukte:
   - bei der Reaktion mit der Flüssigkeit 3 wie Wasser entstehen als feste Reaktionsprodukte z.B. NaOH, KOH, LiOH oder Mischungen davon, wenn Alkalimetall-Legierungen eingesetzt wurden
   - diese festen Reaktionsprodukte sind in Wasser sehr gut löslich (Löslichkeit in H₂O: NaOH 1090 g/l; KOH 1120 g/l, LiOH 128 g/l) und gehen in Lösung. Dadurch werden eine Verstopfung der Poren und eine damit verbundene Unterbrechung der Flüssigalkalizufuhr sowie der Reaktion verhindert. Die Abfuhr der Reaktionsprodukte von der Porenoberfläche wird über deren Löslichkeit in dem als Alkalimetall-Reaktionspartner genutztem Medium, der Flüssigkeit 3, realisiert.
   - die LiOH, NaOH, KOH Lösung/Suspension bei Verwendung von Wasser als Flüssigkeit 3 wird durch eine erste Abführeinrichtung 12 über einen Wärmetauscher 13 geführt. Wird die Anlage mit CO₂ statt H₂O betrieben, wird statt einer Hydroxid-Lösung/Suspension eine Carbonatsuspension wie eine Li₂CO₃-Suspension abgeführt. Die den Wärmetauscher verlassende konzentrierte Suspension oder Lösung 100 oder kann direkt nach dem Abpressen als Wertprodukt gewonnen werden, wie etwa NaOH, oder in das Recycling überführt werden, wie etwa Li₂CO₃. NaOH kann beispielsweise auch in Lösung als Wertprodukt, Natronlauge, gewonnen werden.
d) Bei der beispielhaften Verbrennungsreaktion in Wasser als Flüssigkeit 3 entsteht als gasförmiges Produkt Wasserstoff (H₂). Ein Teil des Wassers im Reaktor 10 kann aufgrund der hohen Temperaturen verdampfen und so den Druck erhöhen. Das Gasgemisch kann über eine zweite Abführeinrichtung 16 auf eine Gasturbine 17 geführt werden und ebenfalls in elektrische Energie mittels eines Generators 19 umgewandelt werden. Aus den gasförmigen Produkten bzw. der verdampften Flüssigkeit können Produkte oder Flüssigkeit im Kondensator 18 auskondensiert werden, und die Flüssigkeit 3 kann, ggf. auch als Gas bzw. Dampf mit Kühlung, über eine zweite Rückführeinrichtung 20 zur zweiten Zuführeinrichtung 11 für Flüssigkeit rückgeführt werden, oder direkt in den Reaktor 10 (nicht gezeigt). Bei einer Reaktion mit Kohlendioxid entsteht als gasförmiges Produkt CO, welches beispielsweise wie auch H₂ weiterverwendet oder gespeichert werden kann.
e) Frische Flüssigkeit 3 wie Wasser oder superkritisches CO₂ oder SOₓ wird dem Brennraum über die zweite Zuführeinrichtung 11 zugeführt.

Eine alternative Ausführungsform wird durch die chemische Nutzung von beispielsweise der Gase H₂ (Reaktionsstoff H₂O) und(oder CO (Reaktionsstoff flüssiges oder superkritisches CO₂) eröffnet. Dabei werden H₂ (Reaktionsstoff H₂O) und/oder CO (Reaktionsstoff flüssiges oder superkritisches CO₂) nicht oder nur teilweise zur Erzeugung von elektrischer Energie verbrannt, sondern weiterverwendet, beispielsweise bei einer Fischer-Tropsch-Synthese, so dass die Gasturbine 17 durch die chemische Nutzung zumindest teilweise ersetzt wird und somit entfallen kann oder kleiner ausfallen kann. Im Gegensatz zu aus Kohle oder Erdgas hergestelltem Synthesegas enthalten die in den obigen Ausführungsformen hergestellten Gase keine stickstoff- oder schwefelenthaltenen Verunreinigen wie NH₃, HCN, H₂S, COS oder Sauerstoff, die sehr aufwändig abgetrennt werden müssen. Als Verunreinigung muss im Fall von CO nur CO₂ abgetrennt werden. Dies kann beispielsweise über herkömmliche CO₂-Wäscher oder Alkalihydroxid, welches auch aus der erfindungsgemäßen Vorrichtung stammen kann, aus dem Gas entfernt werden.

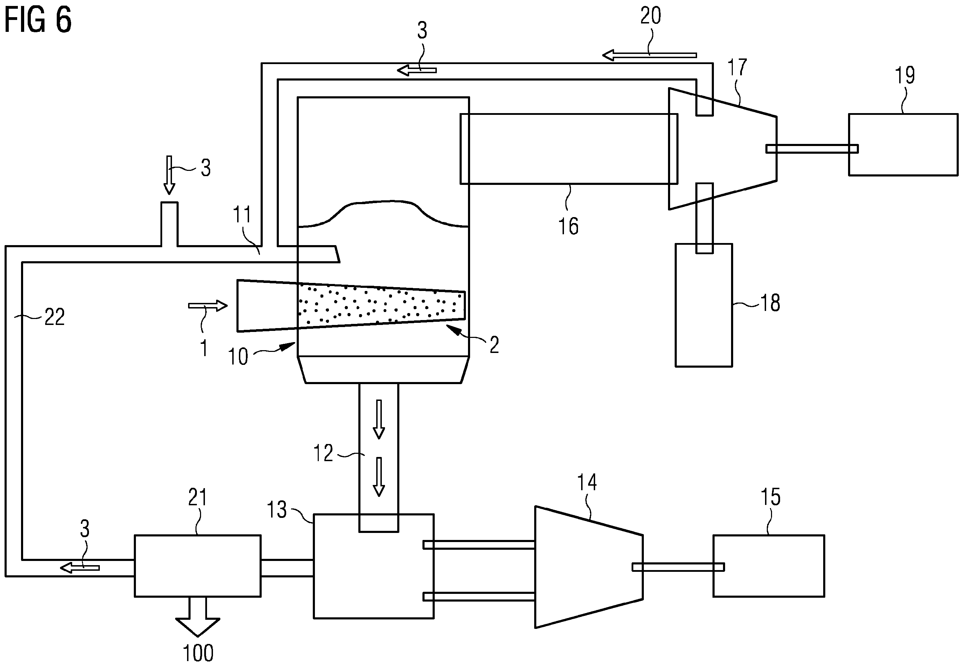

Eine zweite beispielhafte Ausführungsform ist in Figur 6 gezeigt, in der die Abtrennung eines Wertprodukts aus der abgeführten Flüssigkeit oder Lösung und Rückführung von Flüssigkeit 3 zusätzlich zu der in Figur 5 gezeigten ersten beispielhaften Ausführungsform dargestellt ist. Hierbei wird die abgeführte Lösung oder Suspension nach dem Wärmetauscher 13 in eine erste Trenneinrichtung 21 wie einen Flüssigkeitsseparator, z.B. einen NaOH-Separator geleitet und die Flüssigkeit 3 zumindest teilweise von der Suspension oder Lösung 100 abgetrennt. Die abgetrennte Flüssigkeit 3 wird über eine erste Rückführeinrichtung 22 wieder der zweiten Zuführeinrichtung 11, oder direkt dem Reaktor 10 (nicht dargestellt), zugeführt. In einer alternativen Ausführungsform kann statt der Suspension oder Lösung 100 auch ein Feststoff abgetrennt werden.

Die vorliegende Erfindung betrifft ein Verfahren und eine Vorrichtung zur Verbrennung Reaktion eines elektropositiven Metalls, beispielsweise von Alkalimetallen oder Legierungen davon, ggf. unter Druck, unterhalb einer Flüssigkeitsoberfläche wie der flüssigen Oberfläche von Wasser und superkritischen Gasen, wie z.B. CO₂ oder SOₓ. Die bei der Reaktion freigesetzte Wärme kann beispielsweise in elektrische Energie umgewandelt werden. Bei einer Reaktion mit Wasser kann Wasserstoff entstehen, welcher beispielsweise gespeichert oder in geeigneter Weise in einem Energie-Umwandlungsprozess zur Erzeugung von elektrischer Energie genutzt werden kann.

In der vorliegenden Erfindungsmeldung kann das elektropositive Metall wie ein flüssiges Alkalimetall einfach durch eine Einrichtung zum Verdüsen oder Zerstäuben wie eine poröse Sinterdüse in einem Reaktor direkt in die Flüssigkeit eingeführt werden, die bei der Verbrennung/Reaktion als Reaktionspartner für die elektropositiven Metalle dient. Die bei der exothermen Reaktion entstehende thermische Energie kann über z.B. Wärmetauscher mit anschließender Dampfturbine in elektrischer Energie umgewandelt werden. Bei der Reaktion mit Flüssigkeiten wie Wasser entstehen als Reaktionsprodukte Wertprodukte wie beispielsweise Wasserstoff (H₂) und das Hydroxid des elektropositiven Metalls, beispielsweise des bzw. der als Metallbrennstoff eingesetzten Alkalimetalls/Alkalimetall-Legierung (s. auch beispielhafte Gleichungen in Tabelle 1). Wasserstoff oder das Wasserstoff-Wasserdampf-Gemisch wie auch andere Mischungen von verdampfter Flüssigkeit und gasförmigen Produkten kann mit Hilfe einer Gasturbine, beispielsweise einer Wasserstoff-Gasturbine, zur Stromerzeugung eingesetzt werden.

In der vorliegenden Erfindung wird offenbart:
- die direkte Injektion eines ggf. flüssigen, elektropositiven Metalls unterhalb einer flüssigen Oberfläche einer Flüssigkeit wie Wasser, superkritischen Gasen, wie z.B. CO₂ oder SOₓ, die als Verbrennungs- / Reaktionspartner dienen
- ein Verfahren zur Reaktion von elektropositiven Metallen, wobei die festen Reaktionsprodukte in der Flüssigkeit wie Wasser gelöst werden können und aus den Poren eines Porenbrenners bzw. einer Einrichtung zum Verdüsen oder Zerstäuben über deren (LiOH, NaOH, KOH) Löslichkeit in der Flüssigkeit, beispielsweise Wasser ohne Verstopfung gut abgetrennt werden können
- Verfahren zur gleichzeitigen Umwandlung der in elektropositiven Metallen wie Alkalimetallen gespeicherten chemischen Energie in elektrischer Energie und/oder Erzeugung von chemischen Wertstoffen wie NaOH, KOH, LiOH, H₂, CO
- eine emissionsfreier Betrieb eines Kraftwerks mit z.B. H₂O.

## Patentansprüche

1. Verfahren zur Reaktion eines elektropositiven Metalls (1), wobei das elektropositive Metall ausgewählt ist aus Alkali-, Erdalkalimetallen, Aluminium und Zink, sowie Mischungen und/oder Legierungen derselben, mit einer Flüssigkeit (3), wobei das elektropositive Metall in die Flüssigkeit unterhalb der Flüssigkeitsoberfläche verdüst und/oder zerstäubt wird und in der Flüssigkeit zumindest teilweise reagiert.

2. Verfahren gemäß Anspruch 1, bei dem das elektropositive Metall als Flüssigkeit zugeführt wird.

3. Verfahren gemäß Anspruch 1 oder 2, wobei die Flüssigkeit ausgewählt ist aus der Gruppe, bestehend aus Wasser und superkritischen Flüssigkeiten wie Kohlendioxid und Schwefeloxiden.

4. Verfahren gemäß einem der Ansprüche 1 bis 3, wobei das elektropositive Metall mit Hilfe eines Porenbrenners und/oder einer Düse verdüst und/oder zerstäubt wird.

5. Verfahren gemäß einem der vorigen Ansprüche, wobei die Flüssigkeit bei der Reaktion zumindest teilweise verdampft und die verdampfte Flüssigkeit durch Zufuhr von Flüssigkeit ersetzt wird.

6. Verfahren gemäß einem der vorigen Ansprüche, wobei die verdampfte Flüssigkeit und/oder bei der Reaktion von elektropositivem Metall und Flüssigkeit entstehende gasförmige Produkte zumindest teilweise zur Herstellung chemischer Produkte verwendet werden und/oder die Energie der verdampften Flüssigkeit und/oder bei der Reaktion entstehenden gasförmigen Produkte zumindest teilweise umgewandelt wird.

7. Verfahren gemäß einem der vorigen Ansprüche, wobei die Flüssigkeit während oder nach der Reaktion zumindest teilweise als Lösung oder Suspension abgeführt wird und die Energie der abgeführten Lösung oder Suspension zumindest teilweise umgewandelt wird.

8. Vorrichtung zur Reaktion eines elektropositiven Metalls (1) mit einer Flüssigkeit (3), wobei das elektropositive Metall ausgewählt ist aus Alkali-, Erdalkalimetallen, Aluminium und Zink, sowie Legierungen und/oder Mischungen derselben, umfassend
einen Reaktor (10), in dem die Reaktion zwischen dem elektropositiven Metall und der Flüssigkeit stattfindet, mindestens einen Porenbrenner und/oder mindestens eine Einrichtung zum Verdüsen und/oder Zerstäuben des elektropositiven Metalls in die Flüssigkeit am und/oder im Reaktor,
mindestens eine erste Zuführeinrichtung für das elektropositive Metall zum Inneren des Porenbrenners und/oder zur Einrichtung zum Verdüsen und/oder Zerstäuben des elektropositiven Metalls, die derart ausgebildet ist, dem Inneren des Porenbrenners und/oder der Einrichtung zum Verdüsen und/oder Zerstäuben des elektropositiven Metalls das elektropositive Metall zuzuführen,
mindestens eine zweite Zuführeinrichtung für die Flüssigkeit am und/oder im Reaktor, die derart ausgebildet, die Flüssigkeit dem Reaktor zuzuführen,
mindestens eine erste Abführeinrichtung für die bei der Reaktion von elektropositivem Metall und Flüssigkeit entstehende Lösung oder Suspension, die derart ausgebildet ist, die bei der Reaktion von elektropositivem Metall und Flüssigkeit entstehende Lösung oder Suspension aus dem Reaktor abzuführen,
mindestens eine zweite Abführeinrichtung für gasförmige Produkte, die derart ausgebildet ist, zumindest teilweise verdampfte Flüssigkeit und/oder bei der Reaktion von elektropositivem Metall und Flüssigkeit entstehende gasförmige Produkte aus dem Reaktor abzuführen, und
eine Steuereinrichtung, die derart ausgebildet ist, die Flüssigkeit dem Reaktor derart zuzuführen, dass der mindestens einen Porenbrenner und/oder die mindestens eine Einrichtung zum Verdüsen und/oder Zerstäuben des elektropositiven Metalls sich im Reaktor in der Flüssigkeit unterhalb der Flüssigkeitsoberfläche befinden.

9. Vorrichtung gemäß Anspruch 8, weiter umfassend eine Heizvorrichtung zum Bereitstellen des elektropositiven Metalls als Flüssigkeit, die derart ausgebildet ist, das elektropositive Metall vor oder bei der Zufuhr des elektropositiven Metalls zu verflüssigen.

10. Vorrichtung gemäß einem der Ansprüche 8 oder 9, wobei der mindestens eine Porenbrenner und/oder die mindestens eine Einrichtung zum Verdüsen und/oder Zerstäuben des elektropositiven Metalls aus einem Material bestehen, das ausgewählt ist aus der Gruppe, bestehend aus Eisen, Chrom, Nickel Niob, Tantal, Molybdän, Wolfram, Zirkalloy und Legierungen dieser Metalle, sowie Stähle wie Edelstahl und Chrom-Nickel-Stahl.

11. Vorrichtung gemäß einem der Ansprüche 8 bis 10, weiter umfassend mindestens eine erste Einrichtung zur Umwandlung von Energie, die mit der mindestens einen ersten Abführeinrichtung verbunden ist und derart ausgebildet ist, die Energie der abgeführten Lösung oder Suspension zumindest teilweise umzuwandeln.

12. Vorrichtung gemäß einem der Ansprüche 8 bis 11, weiter umfassend
mindestens eine zweite Einrichtung zur Umwandlung von Energie, die mit der mindestens einen zweiten Abführeinrichtung verbunden ist und derart ausgebildet ist, die Energie der zumindest teilweise verdampften Flüssigkeit und/oder bei der Reaktion von elektropositivem Metall und Flüssigkeit entstehenden gasförmigen Produkte zumindest teilweise umzuwandeln, und/oder
mindestens eine Einrichtung zur Herstellung chemischer Produkte, die derart ausgebildet ist, die verdampfte Flüssigkeit und/oder die bei der Reaktion von elektropositivem Metall und Flüssigkeit entstehenden gasförmigen Produkte in weitere chemische Produkte umzuwandeln.

13. Vorrichtung gemäß einem der Ansprüche 8 bis 12, weiter umfassend
mindestens eine dritte Abführeinrichtung, die mit der ersten Einrichtung zur Einrichtung zur Umwandlung von Energie verbunden ist und derart ausgebildet ist, die abgeführte Lösung oder Suspension aus der ersten Einrichtung zur Einrichtung zur Umwandlung von Energie abzuführen,
mindestens eine erste Trenneinrichtung, die mit der mindestens einen dritten Abführeinrichtung verbunden ist und derart ausgebildet ist, die Flüssigkeit aus der abgeführten Lösung oder Suspension abzutrennen, und mindestens eine erste Rückführeinrichtung für Flüssigkeit aus der ersten Trenneinrichtung, die mit der zweiten Zuführeinrichtung und/oder dem Reaktor verbunden ist und derart ausgebildet ist, die Flüssigkeit aus der ersten Trenneinrichtung der zweiten Zuführeinrichtung und/oder dem Reaktor zuzuführen.

14. Vorrichtung gemäß einem der Ansprüche 8 bis 13, weiter umfassend
mindestens eine zweite Trenneinrichtung, die derart ausgebildet ist, die Flüssigkeit und/oder die verdampfte Flüssigkeit aus der abgeführten verdampften Flüssigkeit und/oder den bei der Reaktion von elektropositivem Metall und Flüssigkeit entstehenden gasförmigen Produkte zumindest teilweise abzutrennen, und
mindestens eine zweite Rückführeinrichtung für Flüssigkeit und/oder verdampfte Flüssigkeit aus der zweiten Trenneinrichtung, die mit der zweiten Zuführeinrichtung und/oder dem Reaktor verbunden ist und derart ausgebildet ist, die Flüssigkeit und/oder die verdampfte Flüssigkeit aus der zweiten Trenneinrichtung der zweiten Zuführeinrichtung und/oder dem Reaktor zuzuführen.

15. Vorrichtung gemäß einem der Ansprüche 8 bis 14, weiter umfassend mindestens eine Erfassungseinrichtung, die sich am und/oder im Reaktor befindet und mit der Steuereinrichtung verbunden ist, die derart ausgebildet ist, die Menge an Flüssigkeit im Reaktor zu erfassen.

## Claims

1. Method for reacting an electropositive metal (1), the electropositive metal being selected from alkali metals, alkaline earth metals, aluminum, and zinc, and also mixtures and/or alloys thereof, with a liquid (3), the electropositive metal being atomized and/or jetted into the liquid below the liquid surface, and undergoing at least partial reaction in the liquid.

2. Method according to Claim 1, wherein the electropositive metal is supplied as liquid.

3. Method according to Claim 1 or 2, the liquid being selected from the group consisting of water and supercritical liquids such as carbon dioxide and sulfur oxides.

4. Method according to any of Claims 1 to 3, the electropositive metal being atomized and/or jetted by means of a pore burner and/or a nozzle.

5. Method according to any of the preceding claims, the liquid during the reaction being at least partially vaporized, and the vaporized liquid being replaced by supply of liquid.

6. Method according to any of the preceding claims, the vaporized liquid and/or gaseous products formed in the reaction of electropositive metal and liquid being used at least partially for production of chemical products, and/or the energy of the vaporized liquid and/or of gaseous products formed in the reaction being at least partially converted.

7. Method according to any of the preceding claims, the liquid during or after the reaction being taken off at least partially as solution or suspension, and the energy of the solution or suspension taken off being at least partially converted.

8. Apparatus for reacting an electropositive metal (1) with a liquid (3), the electropositive metal being selected from alkali metals, alkaline earth metals, aluminum, and zinc, and also alloys and/or mixtures thereof, comprising
a reactor (10) in which the reaction between the electropositive metal and the liquid takes place,
at least one pore burner and/or at least one means for jetting and/or atomizing the electropositive metal into the liquid, on and/or in the reactor,
at least one first supply means for the electropositive metal to the interior of the pore burner and/or to the means for jetting and/or atomizing the electropositive metal, said supply means being designed in such a way as to supply the electropositive metal to the interior of the pore burner and/or to the means for jetting and/or atomizing the electropositive metal,
at least one second supply means for the liquid, on and/or in the reactor, said means being designed in such a way as to supply the liquid to the reactor,
at least one first removal means for the solution or suspension formed in the reaction of electropositive metal and liquid, said means being designed in such a way as to remove from the reactor the solution or suspension formed in the reaction of electropositive metal and liquid,
at least one second removal means for gaseous products, said means being designed in such a way as to remove from the reactor at least partially vaporized liquid and/or gaseous products formed in the reaction of electropositive metal and liquid, and a control means, which is designed in such way as to supply the liquid to the reactor in such a way that the at least one pore burner and/or the at least one means for jetting and/or atomizing the electropositive metal are located in the liquid in the reactor, below the liquid surface.

9. Apparatus according to Claim 8, further comprising
a heating apparatus for providing the electropositive metal as a liquid, said apparatus being designed in such a way as to liquefy the electropositive metal before or during the supplying of the electropositive metal.

10. Apparatus according to either of Claims 8 and 9, the at least one pore burner and/or the at least one means for jetting and/or atomizing the electropositive metal being made of a material selected from the group consisting of iron, chromium, nickel, niobium, tantalum, molybdenum, tungsten, Zircaloy, and alloys of these metals, and also steels such as stainless steel and chromium-nickel steel.

11. Apparatus according to any of Claims 8 to 10, further comprising at least one first means for conversion of energy, said means being connected to the at least one first removal means and being designed in such a way as to convert at least partially the energy of the solution or suspension removed.

12. Apparatus according to any of Claims 8 to 11, further comprising
at least one second means for conversion of energy, said means being connected to the at least one second removal means and being designed in such a way as to convert at least partially the energy of the at least partially vaporized liquid and/or of gaseous products formed in the reaction of electropositive metal and liquid, and/or at least one means for producing chemical products, said means being designed in such a way as to convert the vaporized liquid and/or the gaseous products formed in the reaction of electropositive metal and liquid into further chemical products.

13. Apparatus according to any of Claims 8 to 12, further comprising
at least one third removal means, which is connected by the first means to the means for conversion of energy and which is designed in such a way as to remove the solution or suspension removed from the first means to the means for conversion of energy,
at least one first separating means, which is connected to the at least one third removal means and which is designed in such a way as to separate the liquid from the solution or suspension removed, and
at least one first return means for liquid from the first separating means, which is connected to the second supply means and/or to the reactor and which is designed in such a way as to supply the liquid from the first separating means to the second supply means and/or to the reactor.

14. Apparatus according to any of Claims 8 to 13, further comprising
at least one second separating means, which is designed in such a way as to at least partially separate the liquid and/or the vaporized liquid from the vaporized liquid removed and/or from the gaseous products formed in the reaction of electropositive metal and liquid, and
at least one second return means for liquid and/or vaporized liquid from the second separating means, said return means being connected to the second supply means and/or to the reactor and being designed in such a way as to supply the liquid and/or the vaporized liquid from the second separating means to the second supply means and/or to the reactor.

15. Apparatus according to any of Claims 8 to 14, further comprising at least one detecting means which is located on and/or in the reactor and is connected to the control means, and which is designed in such a way as to detect the amount of liquid in the reactor.

## Revendications

1. Procédé de réaction sur un liquide (3) d' un métal (1) électropositif,
le métal électropositif étant choisi parmi les métaux alcalins, les métaux alcalino-terreux, l' aluminium et le zinc, ainsi que leurs mélanges et/ou leurs alliages,
le métal électropositif étant atomisé et/ou pulvérisé dans le liquide en dessous de la surface du liquide et réagissant, au moins en partie, dans le liquide.

2. Procédé suivant la revendication 1, dans lequel on apporte le métal électropositif sous la forme d' un liquide.

3. Procédé suivant la revendication 1 ou 2, dans lequel le liquide est choisi dans le groupe constitué de l' eau et de liquides hypercritiques, comme le dioxyde de carbone et les oxydes de soufre.

4. Procédé suivant l' une des revendications 1 à 3, dans lequel on atomise et/ou on pulvérise le métal électropositif à l' aide d' un brûleur à pore et/ou d' une buse.

5. Procédé suivant l' une des revendications précédentes, dans lequel le liquide s' évapore, au moins en partie, lors de la réaction et on remplace le liquide évaporé par apport de liquide.

6. Procédé suivant l' une des revendications précédentes, dans lequel on utilise le liquide évaporé et/ou des produits gazeux se formant lors de la réaction du métal électropositif et du liquide, au moins en partie, pour la production de produits chimiques et/ou on transforme, au moins en partie, l' énergie du liquide évaporé et/ou des produits gazeux se formant lors de la réaction.

7. Procédé suivant l' une des revendications précédentes, dans lequel on évacue, au moins en partie, sous la forme d' une solution ou d' une suspension, le liquide pendant ou après la réaction, et on transforme, au moins en partie, l' énergie de la solution ou de la suspension évacuée.

8. Installation de réaction d' un métal (1) électropositif sur un liquide (3), le métal électropositif étant choisi parmi les métaux alcalins, les métaux alcalino-terreux, l' aluminium et le zinc, ainsi que leurs mélanges et/ou leurs alliages, comportant
un réacteur (10), dans lequel a lieu la réaction entre le métal électropositif et le liquide,
au moins un brûleur à pore et/ou au moins un dispositif d' atomisation et/ou de pulvérisation du métal électropositif dans le liquide sur et/ou dans le réacteur,
au moins un premier dispositif d' apport du métal électropositif à l' intérieur du brûleur à pore et/ou au dispositif d' atomisation et/ou de pulvérisation du métal électropositif, qui est constitué de manière à apporter le métal électropositif à l' intérieur du brûleur à pore et/ou du dispositif de pulvérisation et/ou d' atomisation du métal électropositif,
au moins un deuxième dispositif d' apport du liquide sur et/ou dans le réacteur, qui est constitué de manière à apporter le liquide au réacteur,
au moins un premier dispositif d' évacuation de la solution ou de la suspension formée lors de la réaction du métal électropositif et du liquide, qui est constitué de manière à évacuer du réacteur la solution ou la suspension se formant lors de la réaction du métal électropositif et du liquide,
au moins un deuxième dispositif d' évacuation de produits gazeux, qui est constitué, au moins en partie, pour évacuer du réacteur du liquide évaporé et/ou des produits gazeux se formant lors de la réaction du métal électropositif et du liquide et
un dispositif de commande, qui est constitué pour apporter le liquide au réacteur, de manière à ce que le au moins un brûleur à pore et/ou le au moins un dispositif d' atomisation et/ou de pulvérisation du métal électropositif, se trouve dans le réacteur dans le liquide en dessous du niveau du liquide.

9. Installation suivant la revendication 8, comprenant, en outre, un dispositif de chauffage pour mettre à disposition le métal électropositif sous forme d' un liquide, qui est constitué pour liquéfier le métal électropositif avant ou lors de l' apport du métal électropositif.

10. Installation suivant l' une des revendications 8 ou 9, dans laquelle le au moins un brûleur à pore et/ou le au moins un dispositif d' atomisation et/ou de pulvérisation du métal électropositif est en un matériau choisi dans le groupe constitué du fer, du chrome, du nickel, du niobium, du tantale, du molybdène, du tungstène, du zircaloy et des alliages de ces métaux, ainsi que des aciers comme l' acier fin et l' acier chrome-nickel.

11. Installation suivant l' une des revendications 8 à 10, comprenant, en outre, au moins un premier dispositif de transformation d' énergie, qui est relié au au moins un premier dispositif d' évacuation et est constitué de manière à transformer, au moins en partie, l' énergie de la solution ou de la suspension évacuée.

12. Installation suivant l' une des revendications 8 à 11, comprenant en outre,
au moins un deuxième dispositif de transformation d' énergie, qui est relié au au moins un deuxième dispositif d' évacuation et est constitué de manière à transformer, au moins en partie, l' énergie du liquide évaporé, au moins en partie, et/ou des produits gazeux se formant lors de la réaction du métal électropositif et du liquide et/ou au moins un dispositif de préparation de produits chimiques constitué de manière à transformer le liquide évaporé et/ou les produits gazeux se formant lors de la réaction du métal électropositif et du liquide en d' autres produits chimiques.

13. Installation suivant l' une des revendications 8 à 12, comprenant, en outre,
au moins un troisième dispositif d' évacuation, qui est relié au premier dispositif de transformation d' énergie et est constitué de manière à évacuer la solution ou la suspension évacuée du premier dispositif au dispositif de transformation d' énergie,
au moins un premier dispositif de séparation, qui est relié au au moins un troisième dispositif d' évacuation et est constitué de manière à séparer le liquide de la solution ou de la suspension évacuée et
au moins un premier dispositif de recyclage du liquide du premier dispositif de séparation, qui est relié au deuxième dispositif d' apport et/ou au réacteur et qui est constitué de manière à apporter le liquide du premier dispositif de séparation au deuxième dispositif d' apport et/ou au réacteur.

14. Installation suivant l' une des revendications 8 à 13, comprenant, en outre,
au moins un deuxième dispositif de séparation, qui est constitué de manière à séparer, au moins en partie, le liquide et le liquide évaporé du liquide évaporé évacué et/ou des produits gazeux se formant lors de la réaction du métal électropositif et du liquide et
un deuxième dispositif de recyclage du liquide et/ou du liquide évaporé du deuxième dispositif de séparation, qui est relié au deuxième dispositif d' apport et/ou au réacteur et est constitué de manière à apporter le liquide et/ou le liquide évaporé du deuxième dispositif de séparation au deuxième dispositif d' apport et/ou au réacteur.

15. Installation suivant l' une des revendications 8 à 14, comprenant, en outre, au moins un dispositif de détection, qui se trouve sur et/ou dans le réacteur et qui est relié au dispositif de commande et qui est constitué de manière à détecter la quantité de liquide dans le réacteur.
